# EUROPÄISCHE PATENTSCHRIFT

(11) **EP 2 978 805 B1**
(45) Veröffentlichungstag und Bekanntmachung des Hinweises auf die Patenterteilung: **15.11.2023**
(21) Anmeldenummer: 14713057.9
(22) Anmeldetag: 17.03.2014
(51) Int. Cl.: C08K 5/053, C08K 5/092, C08K 5/098, C08K 5/11, C08L 27/06

(54) **STABILISATORZUSAMMENSETZUNGEN ENTHALTEND SALZE VON DICARBONSÄUREN UND POLYOLE**
STABILIZER COMPOSITIONS COMPRISING SALTS OF DICARBOXYLIC ACIDS AND POLYOLS
COMPOSITIONS STABILISATRICES CONTENANT DES SELS D'ACIDES DICARBOXYLIQUES ET DES POLYOLS

(30) Priorität: 27.03.2013 DE 102013005426
(43) Veröffentlichungstag der Anmeldung: 03.02.2016
(73) Patentinhaber: Baerlocher GmbH, 85716 Unterschleissheim (DE)
(72) Erfinder: REICHWALD, Frank, 80992 München (DE); RENTZSCH, Christoph, 80809 München (DE); LINDNER, Meiliana, 85757 Karlsfeld (DE)
(74) Vertreter: Mathys & Squire
(86) Internationale Anmeldenummer: PCT/EP2014/055347
(87) Internationale Veröffentlichungsnummer: WO 2014/154520

(56) Entgegenhaltungen:
- EP-A1- 2 083 044
- WO-A1-2012/143794

## Beschreibung

Die vorliegende Erfindung betrifft eine Stabilisatorzusammensetzung zur Stabilisierung halogenhaltiger Polymerer enthaltend ein Salz einer Dicarbonsäure und ein Polyol. Ebenso betrifft die vorliegende Erfindung ein Verfahren zur Herstellung einer Stabilisatorzusammensetzung zur Stabilisierung halogenhaltiger Polymerer sowie die Verwendung einer Stabilisatorzusammensetzung zur Stabilisierung halogenhaltiger Polymerer. Gemäß einem weiteren Aspekt betrifft die vorliegende Erfindung auch einen Formkörper, der aus mindestens einem erfindungsgemäß stabilisierten halogenhaltigen Polymeren hergestellt wird.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung, als auch zu einer Änderung der Materialeigenschaften führt.

Darüber hinaus kann die aus nicht-stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung nicht-stabilisierter halogenierter Polymerer zu Formkörpern, beispielsweise durch Extrusion, zu Produktionsunterbrechungen kommt und die Polymermasse für eine längere Zeitdauer im Extruder verweilt. Weiterhin neigen Polymere, die einer derartigen Zersetzung unterworfen sind, dazu, Anhaftungen an den Verarbeitungsanlagen zu bilden, die nur schwierig wieder zu entfernen sind.

Neben den hier geschilderten Problemen, die in einer frühen Phase der Herstellung von Formkörpern aus halogenhaltigen Polymeren auftreten, sind jedoch für die Gebrauchseigenschaften eines derartigen Formkörpers über einen längeren Zeitraum Farbstabilität und möglichst unveränderte Materialeigenschaften wichtig. Insbesondere bei Formkörpern, die Licht, wechselnden Temperaturen oder anderen äußeren Einflüssen ausgesetzt sind, kommt es mit zunehmender Gebrauchsdauer zu Veränderungen der Farbe und der Materialeigenschaften, die gegebenenfalls bis zur Unbrauchbarkeit des Formkörpers fortschreiten können.

Um die genannten Probleme zu lösen, werden halogenhaltigen Polymeren während der Verarbeitung üblicherweise Stabilisatoren zugesetzt, welche die oben genannten Zersetzungsreaktionen möglichst weitgehend verhindern sollen. In der Regel handelt es sich bei derartigen Stabilisatoren um Feststoffe, die dem zu verarbeitenden Polymeren vor seiner Verarbeitung zugegeben werden.

Um den Problemen der Anfangsfarbe und der Farbstabilität entgegenzuwirken, wurden in der Vergangenheit häufig Stabilisatorzusammensetzungen eingesetzt, die zum einen während der Verarbeitungsphase zum Formkörper und zum anderen im Langzeitgebrauch den Veränderungen von Farbe und Materialeigenschaften entgegenwirken sollen.

Die stabilisierende Wirkung von Natriumsalzen von Carbonsäuren und Dicarbonsäuren auf halogenhaltige Polymere wurde bereits in der Vergangenheit belegt. Beispielsweise wurde die Verwendung von Natriumfumarat und Natriummalonat in calciumbasierten Stabilisatorzusammensetzungen in der EP 2363431 und der WO 2011/054537 beschrieben. Die Verwendung von Natriumsalzen von Carbonsäuren in Gegenwart zinnhaltiger Verbindungen wurde beispielsweise in der DE 2137373, der EP 2298835 und der GB1291144 beschrieben.

EP 2 083 044 A1 offenbart Zusammensetzungen zur Stabilisierung halogenhaltiger Polymerer. Die in D1 offenbarten Zusammensetzungen enthalten a) Dinatriumadipat und b) eine Verbindung ausgewählt aus der Gruppe bestehend aus M(ClO4)k und (CF3SO3)nM.

WO 2012/143794 A1 offenbart Zusammensetzungen zur Stabilisierung halogenhaltiger Polymerer. Die in D2 offenbarten Zusammensetzungen enthalten einen Organozinn-Stabilisator und eine wässrige Lösung enthaltend ein Metallsalz einer Polycarbonsäure.

Die stabilisierende Wirkung von Natriumsalzen von Carbonsäuren und Dicarbonsäuren, wie sie in der Vergangenheit beschrieben wurde, konnte jedoch die zuvor diskutierten Probleme hinsichtlich der thermischen Stabilität, der Anfangsfarbe und der Farbhaltung von halogenhaltigen Polymeren nicht zufriedenstellend lösen. Alle Stabilisatorzusammensetzungen der genannten Offenbarungen zeigen lediglich eine kurzzeitige und bei weitem nicht ausreichende thermische Stabilisierung halogenhaltiger Polymerer.

Der vorliegenden Erfindung lag daher die Aufgabe zugrunde, Stabilisatorzusammensetzungen für halogenhaltige Polymere zur Verfügung zu stellen, welche die oben genannten Bedürfnisse befriedigen und die thermischen Eigenschaften halogenhaltiger Polymerer verbessern. Darüber hinaus sollten Stabilisatorzusammensetzungen bereitgestellt werden, die sich durch ein gutes Verarbeitungsverhalten auszeichnen, beispielsweise im Rahmen der Herstellung von Formkörpern durch Extrusion eines stabilisierten Polymeren. Weiterhin lag der vorliegenden Erfindung die Aufgabe zugrunde, ein Verfahren zur Stabilisierung halogenhaltiger Polymerer zur Verfügung zu stellen. Darüber hinaus lag der vorliegenden Erfindung die Aufgabe zugrunde, Polymerzusammensetzungen bereitzustellen, die eine gute Farbstabilität aufweisen.

Die der Erfindung zugrunde liegenden Aufgaben werden durch eine Stabilisatorzusammensetzung, ein Verfahren zur Stabilisierung halogenhaltiger Polymerer, eine Polymerzusammensetzung und einen Formkörper gelöst, wie sie im nachfolgenden Text beschrieben sind.

Gegenstand der vorliegenden Erfindung ist eine Stabilisatorzusammensetzung mindestens enthaltend
a) mindestens ein Salz einer Dicarbonsäure oder eines Dicarbonsäuremonoesters der allgemeinen Formel (I) oder (II) 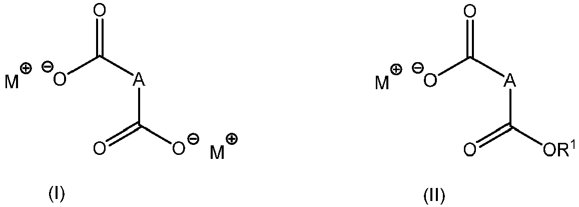 oder ein Gemisch aus zwei oder mehr davon,
   wobei M⁺ für Li⁺, Na⁺, K⁺, NH₄⁺ oder ein organisches Kation steht,
   R¹ für Wasserstoff, substituierte oder unsubstituierte, lineare oder verzweigte, gesättigte oder ungesättigte aliphatische Alkylreste mit 1 bis 44 Kohlenstoffatomen, substituierte oder unsubstituierte, gesättigte oder ungesättigte Cycloalkylreste mit 5 bis 44 Kohlenstoffatomen, substituierte oder unsubstituierte Arylreste mit 5 bis 44 Kohlenstoffatomen, substituierte oder unsubstituierte Aralkylreste mit 6 bis 44 Kohlenstoffatomen, substituierte oder unsubstituierte, lineare oder verzweigte Alkenylreste mit 2 bis 44 Kohlenstoffatomen oder substituierte oder unsubstituierte, lineare oder verzweigte Alkinylreste mit 6 bis 44 Kohlenstoffatomen und
   A für eine Kohlenstoffkette aus mindestens zwei Kohlenstoffatomen steht,
   wobei die kürzeste Verbindung zwischen den Carboxylatgruppen eine gesättigte Kohlenstoffkette aus mindestens zwei Kohlenstoffatomen ist,
   wobei jedes der mindestens zwei Kohlenstoffatome der kürzesten Verbindung zwischen den Carboxylatgruppen unabhängig voneinander zwei Reste R² und R³ trägt und
   die Reste R² und R³ der mindestens zwei Kohlenstoffatome der kürzesten Verbindung zwischen den Carboxylatgruppen unabhängig voneinander substituierte oder unsubstituierte, lineare oder verzweigte, gesättigte oder ungesättigte aliphatische Alkylreste mit 1 bis 44 Kohlenstoffatomen, substituierte oder unsubstituierte, gesättigte oder ungesättigte Cycloalkylreste mit 5 bis 44 Kohlenstoffatomen, substituierte oder unsubstituierte Arylreste mit 5 bis 44 Kohlenstoffatomen, substituierte oder unsubstituierte Aralkylreste mit 6 bis 44 Kohlenstoffatomen, substituierte oder unsubstituierte, lineare oder verzweigte Alkenylreste mit 2 bis 44 Kohlenstoffatomen, substituierte oder unsubstituierte, lineare oder verzweigte Alkinylreste mit 6 bis 44 Kohlenstoffatomen sind oder derart miteinander zu einem substituierten oder unsubstituierten, gesättigten oder ungesättigten cyclischen System mit 5 bis 44 Kohlenstoffatomen verbunden sind, dass sie mindestens zwei Kohlenstoffatome der gesättigten Kohlenstoffkette aus mindestens 2 Kohlenstoffatomen in das cyclische System einschließen, und
b) mindestens ein Polyol, wobei das Polyol mindestens drei Hydroxygruppen enthält und wobei jedes primäre, sekundäre oder tertiäre Kohlenstoffatom des Polyols eine Einfachbindung oder zwei Einfachbindungen zu einem Sauerstoffatom bildet.

Unter einer "Stabilisatorzusammensetzung" wird im Rahmen der vorliegenden Erfindung eine Zusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich, eine erfindungsgemäße Stabilisatorzusammensetzung dem zu stabilisierenden, halogenhaltigen Polymeren während der Verarbeitung beizumischen.

Eine erfindungsgemäße Stabilisatorzusammensetzung weist mindestens zwei Bestandteile a) und b) auf.

Als einen ersten Bestandteil a) enthält eine erfindungsgemäße Stabilisatorzusammensetzung mindestens ein Salz einer Dicarbonsäure oder eines Dicarbonsäuremonoesters entsprechend einer der Formeln (I) oder (II)

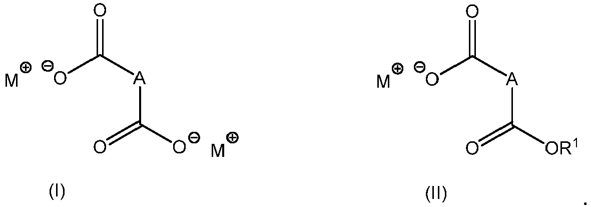

Als Salz einer Dicarbonsäure oder eines Dicarbonsäuremonoesters eignen sich erfindungsgemäß sowohl anorganische als auch organische Salze der Carbonsäuren entsprechend einer der Formeln (I) oder (II).

Als anorganische Salze werden Salze der Carbonsäuren entsprechend einer der Formeln (I) oder (II) verstanden, wobei M⁺ ein einwertiges anorganisches Kation ist. Bevorzugte anorganische Kationen M⁺ sind im Rahmen der vorliegenden Erfindung Li⁺, Na⁺, K⁺ und NH₄⁺. Besonders bevorzugte anorganische Kationen M⁺ sind im Rahmen der vorliegenden Erfindung Na⁺ und K⁺.

Als organische Salze werden Salze der Carbonsäuren entsprechend einer der Formeln (I) oder (II) verstanden, wobei M⁺ ein einwertiges Kation mit mindestens einem organischen Bestandteil ist. Bevorzugte Kationen mit mindestens einem organischen Bestandteil sind organische Onium-Ionen, wobei unter dem Begriff organische Onium-Ionen im Rahmen der vorliegenden Erfindung Ammonium-, Sulfonium- und Phosphonium-Ionen verstanden werden, die mindestens einen organischen Rest tragen. Bevorzugt können die organischen Onium-Ionen 1, 2, 3 oder 4 organische Reste tragen. Die organischen Reste können dabei beispielsweise direkt oder über ein Heteroatom, beispielsweise ein Sauerstoffatom, mit dem Onium-Rest verbunden sein. Als organische Reste sind beispielsweise Alkyl-, Aryl-, Aralkyl-, Cycloalkyl-, Alkenyl-, Alkinyl- oder Cycloalkenylreste geeignet. Als Alkylreste sind beispielsweise Alkylreste mit 1 bis 44 Kohlenstoffatomen, bevorzugt mit 1 bis 8 Kohlenstoffatomen geeignet. Als Arylreste sind beispielsweise Arylreste mit 5 bis 44 Kohlenstoffatomen, bevorzugt mit 5 bis 8 Kohlenstoffatomen geeignet. Als Aralkylreste sind beispielsweise Aralkylreste mit 6 bis 44 Kohlenstoffatomen, bevorzugt mit 6 bis 8 Kohlenstoffatomen geeignet. Als Cycloalkylreste sind beispielsweise Cycloalkylreste mit 5 bis 44 Kohlenstoffatomen, bevorzugt mit 5 bis 8 Kohlenstoffatomen geeignet. Als Cycloalkenylreste sind beispielsweise Cycloalkenylreste mit 5 bis 44 Kohlenstoffatomen, bevorzugt mit 5 bis 8 Kohlenstoffatomen geeignet. Als Alkenylreste sind beispielsweise Alkenylreste mit 2 bis 44 Kohlenstoffatomen, bevorzugt mit 2 bis 8 Kohlenstoffatomen geeignet. Als Alkinylreste sind beispielsweise Alkinylreste mit 2 bis 44 Kohlenstoffatomen, bevorzugt mit 2 bis 8 Kohlenstoffatomen geeignet.

Weiterhin können die organischen Onium-Ionen neben dem mindestens einen organischen Rest noch mindestens eine funktionelle Gruppe aufweisen. Beispielsweise als funktionelle Gruppen im Rahmen der vorliegenden Erfindung geeignet sind NH-Gruppen, NH₂-Gruppen, OH-Gruppen, SH-Gruppen, Estergruppen, Ethergruppen, Thioethergruppen, Isocyanuratgruppen und Ketogruppen.

Die organischen Onium-Ionen können beispielsweise aufgrund einer Protonierungsreaktion eine positive Ladung aufweisen. Es ist auch möglich, dass die organischen Onium-Ionen aufgrund einer Peralkylierungsreaktion eine positive Ladung aufweisen. Beispiele für derartige Onium-Ionen sind Tetraalkylammonium-Ionen, Trialkylsulfonium-Ionen oder Tetraalkylphosphonium-Ionen.

Weiterhin können die organischen Onium-Ionen zwei oder gegebenenfalls mehr unterschiedliche der genannten Substituententypen aufweisen.

Bevorzugt im Rahmen der vorliegenden Erfindung ist das Kation M⁺ ein einwertiges, anorganisches Kation. Bevorzugt steht M⁺ daher für Li⁺, Na⁺, K⁺ und NH₄⁺. Besonders bevorzugt im Rahmen der vorliegenden Erfindung steht M⁺ für Na⁺ oder K⁺.

Im Rahmen der vorliegenden Erfindung können die erfindungsgemäßen Stabilisatorzusammensetzungen mindestens ein Monosalz einer Dicarbonsäure oder mindestens ein Salz eines Dicarbonsäuremonoesters enthalten. Entsprechend Formel (II) steht R¹ daher für ein Wasserstoffatom, ein Alkyl-, ein Cycloalkyl-, ein Aryl-, ein Aralkyl-, ein Alkenyl- oder ein Alkinylrest.

Bevorzugte Alkylreste sind substituierte oder unsubstituierte, lineare oder verzweigte, gesättigte oder ungesättigte aliphatische Alkylreste mit 1 bis 44 Kohlenstoffatomen beispielsweise substituierte oder unsubstituierte, lineare oder verzweigte, gesättigte oder ungesättigte aliphatische Alkylreste mit 2 bis 24 Kohlenstoffatomen. Besonders bevorzugt sind lineare oder verzweigte Alkylreste mit 2 bis 5 Kohlenstoffatomen, beispielsweise Ethyl, Propyl, Isopropyl, n-Butyl, Isobutyl, t-Butyl, n-Pentyl oder Isopentyl.

Bevorzugte Cycloalkylreste sind substituierte oder unsubstituierte, gesättigte oder ungesättigte Cycloalkylreste mit 5 bis 44 Kohlenstoffatomen, beispielsweise substituierte oder unsubstituierte, gesättigte oder ungesättigte Cycloalkylreste mit 5 bis 24 Kohlenstoffatomen. Besonders bevorzugt sind Cycloalkylreste mit 5 bis 12 Kohlenstoffatomen, beispielsweise Cyclopentyl, Cyclohexyl, Cycloheptyl oder Cyclooctyl.

Bevorzugte Arylreste sind substituierte oder unsubstituierte Arylreste mit 5 bis 44 Kohlenstoffatomen, beispielsweise substituierte oder unsubstituierte Arylreste mit 6 bis 24 Kohlenstoffatomen. Besonders bevorzugte Arylreste sind Phenyl und alkylierte Phenylreste.

Bevorzugte Aralkylreste sind substituierte oder unsubstituierte Aralkylreste mit 6 bis 44 Kohlenstoffatomen, beispielsweise mit 6 bis 24 Kohlenstoffatomen oder mit 6 bis 8 Kohlenstoffatomen. Besonders bevorzugte Aralkylreste sind Benzyl und substituierte Benzylreste.

Bevorzugte Alkenylreste sind lineare oder verzweigte, substituierte oder unsubstituierte Alkenylreste mit 2 bis 44 Kohlenstoffatomen, beispielsweise Alkenylreste mit 2 bis 24 Kohlenstoffatomen oder Alkenylreste mit 2 bis 8 Kohlenstoffatomen. Besonders bevorzugte Alkenylreste sind Allyl und Vinyl.

Bevorzugte Alkinylreste sind lineare oder verzweigte, substituierte oder unsubstituierte Alkinylreste mit 2 bis 44 Kohlenstoffatomen, beispielsweise Alkinylreste mit 2 bis 24 Kohlenstoffatomen oder Alkinylreste mit 2 bis 8 Kohlenstoffatomen. Besonders bevorzugte Alkinylreste sind Ethinyl und Propinyl.

Besonders bevorzugt im Rahmen der vorliegenden Erfindung ist R¹ Wasserstoff.

Entsprechend den Formeln (I) und (II) sind die Carboxylatgruppen der Dicarbonsäure oder des Dicarbonsäuremonoesters durch eine Gruppe A verbunden. Dabei steht A für eine Kohlenstoffkette aus mindestens zwei Kohlenstoffatomen. Die kürzeste Verbindung zwischen den beiden Carboxylatgruppen der Dicarbonsäuren oder des Dicarbonsäuremonoesters ist eine gesättigte Kohlenstoffkette aus mindestens zwei Kohlenstoffatomen. Beispielsweise ist die kürzeste Verbindung zwischen den beiden Carboxylatgruppen der Dicarbonsäuren oder des Dicarbonsäuremonoesters eine gesättigte Kohlenstoffkette aus 2 bis 22 Kohlenstoffatomen oder eine gesättigte Kohlenstoffkette aus 2 bis 12 Kohlenstoffatomen oder eine gesättigte Kohlenstoffkette aus 2 bis 8 Kohlenstoffatomen oder eine gesättigte Kohlenstoffkette aus 2 bis 6 Kohlenstoffatomen. Bevorzugt im Rahmen der vorliegenden Erfindung ist die kürzeste Verbindung zwischen den beiden Carboxylatgruppen der Dicarbonsäuren oder des Dicarbonsäuremonoesters eine gesättigte Kohlenstoffkette aus 2, 3 oder 4 Kohlenstoffatomen.

Jedes dieser mindestens zwei Kohlenstoffatome der kürzesten Verbindung zwischen den beiden Carboxylatgruppen trägt unabhängig voneinander zwei Reste R² und R³. Im Rahmen der vorliegenden Erfindung stehen die Reste R² und R³ unabhängig voneinander für Wasserstoff, Alkylreste, Cycloalkylreste, Arylreste, Aralkylreste, Alkenylreste oder Alkinylreste.

Bevorzugte Alkylreste sind substituierte oder unsubstituierte, lineare oder verzweigte, gesättigte oder ungesättigte aliphatische Alkylreste mit 1 bis 44 Kohlenstoffatomen beispielsweise substituierte oder unsubstituierte, lineare oder verzweigte, gesättigte oder ungesättigte aliphatische Alkylreste mit 2 bis 24 Kohlenstoffatomen. Besonders bevorzugt sind lineare oder verzweigte Alkylreste mit 2 bis 5 Kohlenstoffatomen, beispielsweise Ethyl, Propyl, Isopropyl, n-Butyl, Isobutyl, t-Butyl, n-Pentyl oder Isopentyl.

Bevorzugte Cycloalkylreste sind substituierte oder unsubstituierte, gesättigte oder ungesättigte Cycloalkylreste mit 5 bis 44 Kohlenstoffatomen, beispielsweise substituierte oder unsubstituierte, gesättigte oder ungesättigte Cycloalkylreste mit 5 bis 24 Kohlenstoffatomen. Weiter bevorzugt sind Cycloalkylreste mit 5 bis 12 Kohlenstoffatomen, beispielsweise Cyclopentyl, Cyclohexyl, Cycloheptyl oder Cyclooctyl.

Bevorzugte Arylreste sind substituierte oder unsubstituierte Arylreste mit 5 bis 44 Kohlenstoffatomen, beispielsweise substituierte oder unsubstituierte Arylreste mit 6 bis 24 Kohlenstoffatomen oder mit 6 bis 8 Kohlenstoffatomen. Besonders bevorzugte Arylreste sind Phenyl und alkylierte Phenylreste.

Bevorzugte Aralkylreste sind substituierte oder unsubstituierte Aralkylreste mit 6 bis 44 Kohlenstoffatomen, beispielsweise mit 6 bis 24 Kohlenstoffatomen oder mit 6 bis 8 Kohlenstoffatomen. Besonders bevorzugte Aralkylreste sind Benzyl und substituierte Benzylreste.

Bevorzugte Alkenylreste sind lineare oder verzweigte, substituierte oder unsubstituierte Alkenylreste mit 2 bis 44 Kohlenstoffatomen, beispielsweise Alkenylreste mit 2 bis 24 Kohlenstoffatomen oder Alkenylreste mit 2 bis 8 Kohlenstoffatomen. Besonders bevorzugte Alkenylreste sind Allyl und Vinyl.

Bevorzugte Alkinylreste sind lineare oder verzweigte, substituierte oder unsubstituierte Alkinylreste mit 2 bis 44 Kohlenstoffatomen, beispielsweise Alkinylreste mit 2 bis 24 Kohlenstoffatomen oder Alkinylreste mit 2 bis 8 Kohlenstoffatomen. Besonders bevorzugte Alkinylreste sind Ethinyl und Propinyl.

Weiterhin können zwei der Reste R² oder zwei der Reste R³ oder ein Rest R² und ein Rest R³ derart miteinander verbunden sein, dass sie mindestens zwei Kohlenstoffatome der gesättigten Kohlenstoffkette aus mindestens zwei Kohlenstoffatomen in ein cyclisches System einschließen.

Daher steht A für eine Kohlenstoffkette aus mindestens zwei Kohlenstoffatomen, wobei die kürzeste Verbindung zwischen den Carboxylatgruppen der Dicarbonsäure eine gesättigte Kohlenstoffkette aus mindestens zwei Kohlenstoffatomen ist, wobei jedes der mindestens zwei Kohlenstoffatome der kürzesten Verbindung zwischen den Carboxylatgruppen unabhängig voneinander zwei Reste R² und R³ trägt und die Reste R² und R³ der mindestens zwei Kohlenstoffatome der kürzesten Verbindung zwischen den Carboxylatgruppen unabhängig voneinander Wasserstoff, substituierte oder unsubstituierte, lineare oder verzweigte, gesättigte oder ungesättigte aliphatische Alkylreste mit 1 bis 44 Kohlenstoffatomen, substituierte oder unsubstituierte, gesättigte oder ungesättigte Cycloalkylreste mit 5 bis 44 Kohlenstoffatomen, substituierte oder unsubstituierte Arylreste mit 5 bis 44 Kohlenstoffatomen sind oder derart miteinander zu einem substituierten oder unsubstituierten, gesättigten oder ungesättigten cyclischen System mit 5 bis 44 Kohlenstoffatomen verbunden sind, dass sie mindestens zwei Kohlenstoffatome der gesättigten Kohlenstoffkette aus mindestens 2 Kohlenstoffatomen in das cyclische System einschließen.

Besonders bevorzugt im Rahmen der vorliegenden Erfindung stehen alle Reste R² und alle Reste R³ für Wasserstoff.

Im Rahmen der vorliegenden Erfindung können die erfindungsgemäßen Stabilisatorzusammensetzungen ein Salz einer Dicarbonsäure entsprechend der Formel (I) enthalten. Bevorzugt werden in den erfindungsgemäßen Stabilisatorzusammensetzungen Salze von Dicarbonsäuren entsprechend der Formel (I) verwendet, bei denen die kürzeste Verbindung zwischen den beiden Carboxylatgruppen eine gesättigte Kohlenstoffkette aus 2 oder 4 Kohlenstoffatomen ist. Besonders bevorzugt im Rahmen der vorliegenden Erfindung werden Dinatriumadipat und Dinatriumsuccinat verwendet.

Im Rahmen der vorliegenden Erfindung können die erfindungsgemäßen Stabilisatorzusammensetzungen ein Salz einer Dicarbonsäure entsprechend der Formel (II) enthalten. Bevorzugt werden in den erfindungsgemäßen Stabilisatorzusammensetzungen Salze von Dicarbonsäuren entsprechend der Formel (II) verwendet, bei denen die kürzeste Verbindung zwischen den beiden Carboxylatgruppen eine gesättigte Kohlenstoffkette aus 2 oder 4 Kohlenstoffatomen ist. Besonders bevorzugt im Rahmen der vorliegenden Erfindung werden das Mononatriumsalz der Adipinsäure und das Mononatriumsalz der Bernsteinsäure verwendet.

Im Rahmen der vorliegenden Erfindung können die erfindungsgemäßen Stabilisatorzusammensetzungen ein Salz eines Dicarbonsäuremonoesters entsprechend der Formel (II) enthalten. Bevorzugt werden in den erfindungsgemäßen Stabilisatorzusammensetzungen Salze von Dicarbonsäuremonoestern entsprechend der Formel (II) verwendet, bei denen die kürzeste Verbindung zwischen den beiden Carboxylatgruppen eine gesättigte Kohlenstoffkette aus 2 oder 4 Kohlenstoffatomen ist. Besonders bevorzugt im Rahmen der vorliegenden Erfindung werden Mononatriumsalze von Adipinsäuremonoestern und Mononatriumsalze von Bernsteinsäuremonoestern verwendet.

Daher enthalten die erfindungsgemäßen Stabilisatorzusammensetzungen bevorzugt mindestens ein Salz einer Dicarbonsäure oder eines Dicarbonsäuremonoesters entsprechend einer der Formeln (I) oder (II), das aus der Gruppe bestehend aus Dinatriumadipat, Dinatriumsuccinat, dem Mononatriumsalz der Adipinsäure, dem Mononatriumsalz der Bernsteinsäure, Mononatriumsalzen von Adipinsäuremonoestern und Mononatriumsalzen von Bernsteinsäuremonoestern ausgewählt ist.

Im Rahmen der Erfindung können die eingesetzten Adipinsäuremonoester und Bernsteinsäuremonoester als Estersubstituenten Alkylreste, Cycloalkylreste oder Arylreste tragen.

Bevorzugte Alkylreste sind substituierte oder unsubstituierte, lineare oder verzweigte, gesättigte oder ungesättigte aliphatische Alkylreste mit 1 bis 44 Kohlenstoffatomen beispielsweise substituierte oder unsubstituierte, lineare oder verzweigte, gesättigte oder ungesättigte aliphatische Alkylreste mit 2 bis 24 Kohlenstoffatomen. Besonders bevorzugt sind lineare oder verzweigte Alkylreste mit 2 bis 5 Kohlenstoffatomen, beispielsweise Ethyl, Propyl, Isopropyl, n-Butyl, Isobutyl, t-Butyl, n-Pentyl oder Isopentyl.

Bevorzugte Cycloalkylreste sind substituierte oder unsubstituierte, gesättigte oder ungesättigte Cycloalkylreste mit 5 bis 44 Kohlenstoffatomen, beispielsweise substituierte oder unsubstituierte, gesättigte oder ungesättigte Cycloalkylreste mit 5 bis 24 Kohlenstoffatomen. Weiter bevorzugt sind Cycloalkylreste mit 5 bis 12 Kohlenstoffatomen, beispielsweise Cyclopentyl, Cyclohexyl, Cycloheptyl oder Cyclooctyl.

Bevorzugte Arylreste sind substituierte oder unsubstituierte Arylreste mit 5 bis 44 Kohlenstoffatomen, beispielsweise substituierte oder unsubstituierte Arylreste mit 6 bis 24 Kohlenstoffatomen oder mit 6 bis 8 Kohlenstoffatomen. Besonders bevorzugte Arylreste sind Phenyl und alkylierte Phenylreste.

Bevorzugte Aralkylreste sind substituierte oder unsubstituierte Aralkylreste mit 6 bis 44 Kohlenstoffatomen, beispielsweise mit 6 bis 24 Kohlenstoffatomen oder mit 6 bis 8 Kohlenstoffatomen. Besonders bevorzugte Aralkylreste sind Benzyl und substituierte Benzylreste.

Bevorzugte Alkenylreste sind lineare oder verzweigte, substituierte oder unsubstituierte Alkenylreste mit 2 bis 44 Kohlenstoffatomen, beispielsweise Alkenylreste mit 2 bis 24 Kohlenstoffatomen oder Alkenylreste mit 2 bis 8 Kohlenstoffatomen. Besonders bevorzugte Alkenylreste sind Allyl und Vinyl.

Bevorzugte Alkinylreste sind lineare oder verzweigte, substituierte oder unsubstituierte Alkinylreste mit 2 bis 44 Kohlenstoffatomen, beispielsweise Alkinylreste mit 2 bis 24 Kohlenstoffatomen oder Alkinylreste mit 2 bis 8 Kohlenstoffatomen. Besonders bevorzugte Alkinylreste sind Ethinyl und Propinyl.

Besonders geeignet im Rahmen der vorliegenden Erfindung sind die Mononatriumsalze des Adipinsäuremonomethylesters, Adipinsäuremonoethylesters, Adipinsäuremonoproylesters, Adipinsäuremonobutylesters, Adipinsäuremonostearylesters, Adipinsäuremono-2-ethylhexyl-esters, Adipinsäuremonoisododecylesters, Adipinsäuremonoisononylesters, Adipinsäuremonoisodecylesters, Bernsteinsäuremonomethylesters, Bernsteinsäuremonoethyl-esters, Bernsteinsäuremonoproylesters, Bernsteinsäuremonobutylesters, Bernsteinsäuremonostearylesters, Bernsteinsäuremono-2-ethylhexylesters, Bernsteinsäuremonoisododecylesters, Bernsteinsäuremonoisononylesters, Bernsteinsäuremonoisodecylesters.

Erfindungsgemäß können die Stabilisatorzusammensetzungen ein Salz einer Dicarbonsäure gemäß Formel (I) oder ein Salz einer Dicarbonsäure gemäß Formel (II) oder ein Salz eines Dicarbonsäuremonoesters gemäß Formel (II) enthalten. Weiterhin können auch Gemische aus zwei oder mehr Dicarbonsäuresalzen gemäß Formel (I) oder Gemische aus zwei oder mehr Dicarbonsäuresalzen gemäß Formel (II) oder Gemische aus zwei oder mehr Salzen von Dicarbonsäuremonoestern gemäß Formel (II) in den erfindungsgemäßen Stabilisatorzusammensetzungen enthalten sein. Auch möglich im Rahmen der vorliegenden Erfindung sind Stabilisatorzusammensetzungen, die ein Gemisch aus einem oder mehr Dicarbonsäuresalzen gemäß Formel (I) mit einem oder mehr Dicarbonsäuresalzen gemäß Formel (II) enthalten, oder die ein Gemisch aus einem oder mehr Dicarbonsäuresalzen gemäß Formel (I) mit einem oder mehr Salzen von Dicarbonsäuremonoestern gemäß Formel (II) enthalten, oder die ein Gemisch aus einem oder mehr Dicarbonsäuresalzen gemäß Formel (II) mit einem oder mehr Salzen von Dicarbonsäuremonoestern gemäß Formel (II) enthalten. Weiterhin möglich sind Stabilisatorzusammensetzungen, die ein Gemisch aus einem oder mehr Dicarbonsäuresalzen gemäß Formel (I) mit einem oder mehr Dicarbonsäuresalzen gemäß Formel (II) und einem oder mehr Salzen von Dicarbonsäuremonoestern gemäß Formel (II) enthalten.

Besonders bevorzugt im Rahmen der vorliegenden Erfindung enthalten die Stabilisatorzusammensetzungen Dinatriumadipat. Weiterhin besonders bevorzugt im Rahmen der vorliegenden Erfindung enthalten die Stabilisatorzusammensetzungen Dinatriumsuccinat.

Die erfindungsgemäßen Stabilisatorzusammensetzungen enthalten das Salz einer Dicarbonsäure oder eines Dicarbonsäuremonoesters entsprechend einer der Formeln (I) oder (II) oder deren Gemische in einer Menge von etwa 0,1 Gew.-% bis etwa 50 Gew.-% bezogen auf die Gesamtmenge der Stabilisatorzusammensetzung. Bevorzugt enthalten die erfindungsgemäßen Stabilisatorzusammensetzungen das Salz einer Dicarbonsäure entsprechend einer der Formeln (I) oder (II) oder deren Gemische in einer Menge von etwa 0,5 Gew.-% bis etwa 48 Gew.-% oder in einer Menge von etwa 0,75 Gew.-% bis etwa 45 Gew.-% oder in einer Menge von etwa 1 Gew.-% bis etwa 35 Gew.-% oder in einer Menge von etwa 1,5 Gew.-% bis etwa 25 Gew.-% oder in einer Menge von etwa 2 Gew.-% bis etwa 20 Gew.-% oder in einer Menge von etwa 1,4 Gew.-% bis etwa 15 Gew.-%, jeweils bezogen auf die Gesamtmenge der Stabilisatorzusammensetzung.

Als einen zweiten Bestandteil b) enthält eine erfindungsgemäße Stabilisatorzusammensetzung ein Polyol.

Polyole im Sinne der vorliegenden Erfindung enthalten mindestens drei Hydroxygruppen. Darüber hinaus bildet jedes primäre, sekundäre oder tertiäre Kohlenstoffatom des Polyols eine Einfachbindung zu einem Sauerstoffatom oder zwei Einfachbindungen zu jeweils einem Sauerstoffatom.

Polyole im Sinne der vorliegenden Erfindung sind beispielsweise Zuckeralkohole. Unter Zuckeralkoholen im Rahmen der vorliegenden Erfindung werden nichtcyclische Polyole der Formel (III) 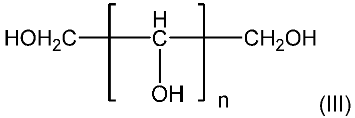 verstanden, die sich strukturell als Reduktionsprodukte von Monosacchariden ableiten. Dabei steht n für 1, 2, 3, 4, 5, 6 oder 7. Erfindungsgemäß bevorzugte Zuckeralkohole der Formel (III) sind Glycerin, Threit, Erythitol, Xylitol, Arabitol, Ribitol, Mannitol, Sorbitol, Galactidol, Iditol und Volemitol. Besonders bevorzugt im Rahmen der vorliegenden Erfindung sind Erythritol, Mannitol und Sorbitol. Weiterhin werden unter Zuckeralkoholen Polyole verstanden, die sich strukturell als Reduktionsprodukte von Disacchariden ableiten. Bevorzugt im Rahmen der vorliegenden Erfindung werden Isomalt, Lactitol und Maltitol verwendet.

Polyole im Sinne der vorliegenden Erfindung sind beispielsweise cyclische Polyole der Formel (IV) 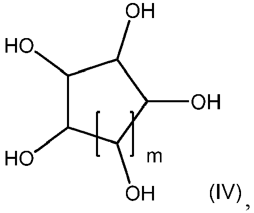 wobei m für eine ganze Zahl von 1 bis 8 steht. Bevorzugt im Rahmen der vorliegenden Erfindung ist m 1, 2, 3 oder 4. Besonders geeignet als Polyol der Formel (IV) ist im Rahmen der vorliegenden Erfindung Inositol, wobei m 2 ist.

Polyole im Sinne der vorliegenden Erfindung sind beispielsweise Pentaerythritol und Dipentaerythritol.

Im Rahmen der vorliegenden Erfindung kann die erfindungsgemäße Stabilisatorzusammensetzung ein Polyol oder ein Gemisch aus zwei oder mehr der genannten Polyole enthalten.

Im Rahmen der vorliegenden Erfindung ist das Polyol bevorzugt aus der Gruppe bestehend aus Pentaerythritol, Dipentaerythritol und Zuckeralkoholen ausgewählt. Ebenfalls erfindungsgemäß sind Stabilisatorzusammensetzungen, die ein Gemisch aus zwei oder mehr Polyolen ausgewählt aus der Gruppe bestehend aus Pentaerythritol, Dipentaerythritol und Zuckeralkoholen enthalten.

Die erfindungsgemäßen Stabilisatorzusammensetzungen enthalten das Polyol oder deren Gemische in einer Menge von etwa 0,1 Gew.-% bis etwa 25 Gew.-% bezogen auf die Gesamtmenge der Stabilisatorzusammensetzung. Bevorzugt enthalten die erfindungsgemäßen Stabilisatorzusammensetzungen das Polyol oder deren Gemische in einer Menge von etwa 0,5 Gew.-% bis etwa 20 Gew.-% oder in einer Menge von etwa 0,75 Gew.-% bis etwa 15 Gew.- % oder in einer Menge von etwa 1 Gew.-% bis etwa 12,5 Gew.-% oder in einer Menge von etwa 1,2 Gew.-% bis etwa 10 Gew.-% oder in einer Menge von etwa 1,3 Gew.-% bis etwa 9,5 Gew.-% oder in einer Menge von etwa 1,4 Gew.-% bis etwa 9 Gew.-%, jeweils bezogen auf die Gesamtmenge der Stabilisatorzusammensetzung.

Keine Polyole im Sinne der vorliegenden Erfindung sind Tris-2-hydroxyethylisocyanurat (THEIC), Trimethylolpropan, Ester von Polyolen, Glycole und Polyglycole. Diese Stoffe können in den erfindungsgemäßen Stabilisatorzusammensetzungen zusätzlich zu den Polyolen im Sinne der vorliegenden Erfindung enthalten sein. Bevorzugt sind diese Stoffe nicht in den erfindungsgemäßen Stabilisatorzusammensetzungen enthalten.

Die erfindungsgemäßen Stabilisatorzusammensetzungen können darüber hinaus noch einen oder mehrere Zusatzstoffe enthalten.

Erfindungsgemäß geeignet sind beispielsweise Verbindungen aus der Gruppe der Metallseifen von gesättigten oder ungesättigten, linearen oder verzweigten, aliphatischen, cycloaliphatischen oder aromatischen, neben der oder den Carbonsäuregruppen substituierten oder unsubstituierten Mono-, Poly- oder Hydroxycarbonsäuren mit 2 bis 44 Kohlenstoffatomen, bevorzugt mit 4 bis 44 Kohlenstoffatomen. Als Metallkationen sind zwei-, drei- und vierwertige Metallkationen geeignet. Beispielsweise sind Metallseifen mit einem Metallkation geeignet, das aus der Gruppe bestehend aus Be, Mg, Ca, La, Mn, Fe, Co, Ni, Cu, Zn, Al und Sn ausgewählt ist. Besonders geeignet sind Mg, Ca und Zn. Bevorzugt sind die erfindungsgemäßen Stabilisatorzusammensetzungen frei von Pb und Cd.

Im Rahmen der vorliegenden Erfindung werden bevorzugt Metallseifen eingesetzt, deren Anionen sich von gesättigten oder ungesättigten Carbonsäuren oder Hydroxycarbonsäuren mit 8 bis 20 Kohlenstoffatomen ableiten. Besonders bevorzugt werden Stearate, Oleate, Laurate, Palmitate, Behenate, Versatate, Hydroxystearate, Dihydroxystearate, p-tert-Butylbenzoate, Octanoate und Isooctanoate von Calcium oder Zink oder Gemische aus zwei oder mehr davon eingesetzt.

Besonders bevorzugt enthalten die erfindungsgemäßen Stabilisatorzusammensetzungen Calciumstearat oder Zinkstearat oder ein Gemisch aus Calciumstearat und Zinkstearat.

Die erfindungsgemäßen Stabilisatorzusammensetzungen können eine der genannten Metallseifen oder ein Gemisch aus zwei oder mehr der genannten Metallseifen in einer Menge von bis zu etwa 60 Gew.-%, beispielsweise in einer Menge von 0,1 Gew.-% bis etwa 60 Gew.- % oder in einer Menge von 0,5 Gew.-% bis etwa 40 Gew.-% oder in einer Menge von 1 Gew.- % bis etwa 30 Gew.-% oder in einer Menge von 5 Gew.-% bis etwa 20 Gew.-% bezogen auf die Gesamtmenge der Stabilisatorzusammensetzung enthalten.

Im Rahmen einer besonderen Ausführungsform der vorliegenden Erfindung ist die erfindungsgemäße Stabilisatorzusammensetzung frei von Zink.

Weiterhin als Zusatzstoffe im Rahmen der vorliegenden Erfindung geeignet sind Uracil und Uracil-Derivate. Bevorzugte Uracil-Derivate sind Aminouracilverbindungen der Formel (V) 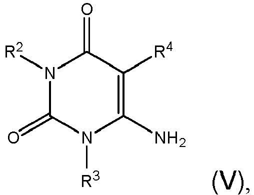 worin die Reste R², R³ und R⁴ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen, einen gegebenenfalls substituierten Arylrest mit 6 bis 44 C-Atomen, einen gegebenenfalls substituierten Aralkylrest mit 7 bis 44 C-Atomen oder einen gegebenenfalls substituierten Acylrest mit 2 bis 44 C-Atomen stehen.

Im Rahmen der vorliegenden Erfindung werden in den erfindungsgemäßen Stabilisatorzusammensetzungen Aminouracilverbindungen gemäß der allgemeinen Formel (V) eingesetzt, bei denen die Reste R², R³ und R⁴ jeweils unabhängig voneinander für einen linearen oder verzweigten Alkylrest mit 1 bis 8 C-Atomen, beispielsweise Methyl, Ethyl, Propyl, Butyl, Pentyl, Hexyl, Heptyl oder Octyl, einen mit Hydroxygruppen substituierten linearen oder verzweigten Alkylrest mit 1 bis 8 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen-, Hydroxy- oder Methoxygruppen substituiert sein können, oder einen Alkenylrest mit 3 bis 6 C-Atomen, beispielsweise Vinyl, Allyl, Methallyl, 1-Butenyl oder 1-Hexenyl stehen.

Erfindungsgemäß als Zusatzstoffe geeignet sind beispielsweise 6-Aminouracil, 6-Amino-1,3-dimethyluracil, 6-Amino-1,3-diethyluracil, 6-Amino-1,3-di-n-propyluracil und 6-Amino-1,3-di-n-butyluracil.

Besonders geeignet im Rahmen der vorliegenden Erfindung sind Uracil und 6-Amino-1,3-dimethyluracil.

Die erfindungsgemäße Stabilisatorzusammensetzung kann nur ein Uracil oder Uracil-Derivat, eine Mischung aus Uracil und einem oder mehr Uracil-Derivaten oder eine Mischung aus zwei oder mehr Uracil-Derivaten enthalten.

Die erfindungsgemäßen Stabilisatorzusammensetzungen können Uracil oder ein Uracil-Derivat oder Gemische davon in einer Menge von bis zu etwa 60 Gew.-%, beispielsweise in einer Menge von 0,1 Gew.-% bis etwa 60 Gew.-% oder in einer Menge von 0,5 Gew.-% bis etwa 40 Gew.-% oder in einer Menge von 1 Gew.-% bis etwa 30 Gew.-% oder in einer Menge von 5 Gew.-% bis etwa 20 Gew.-% bezogen auf die Gesamtmenge der Stabilisatorzusammensetzung enthalten.

Weiterhin als Zusatzstoffe eignen sich anorganische oder organische Verbindungen, die mindestens ein zwei-, drei- oder vierwertiges Metallion aus einer der Gruppen 2 bis 14 des Periodensystems der Elemente als Bestandteil aufweist und die zur Salzbildung mit einer Mineralsäure fähig ist. Besonders geeignet sind beispielsweise anorganische und organische Verbindungen, die mindestens ein zwei-, drei- oder vierwertiges Metallion als Bestandteil aufweisen, das aus der Gruppe bestehend aus Be, Mg, Ca, La, Mn, Fe, Co, Ni, Cu, Zn, Al und Sn ausgewählt ist. Beispielsweise eignen sich hierzu Verbindungen ausgewählt aus der Gruppe bestehend aus Oxiden, Hydroxiden, Carbonaten, Hydrogencarbonaten und Komplexverbindungen mit β-Diketonen.

Bevorzugt enthalten die erfindungsgemäßen Stabilisatorzusammensetzungen Calciumacetylacetonat (Ca(acac)₂).

Die erfindungsgemäßen Stabilisatorzusammensetzungen können die anorganischen und organischen Verbindungen, die mindestens ein zwei-, drei- oder vierwertiges Metallion aus einer der Gruppen 2 bis 14 des Periodensystems der Elemente als Bestandteil aufweisen und die zur Salzbildung mit einer Mineralsäure fähig sind in einer Menge von bis zu etwa 80 Gew.- %, beispielsweise in einer Menge von etwa 0,1 bis etwa 80 Gew.-% oder in einer Menge von etwa 0,5 bis etwa 50 Gew.-% oder in einer Menge von etwa 1 bis etwa 40 Gew.-% oder in einer Menge von etwa 5 bis etwa 20 Gew.-% bezogen auf die Gesamtmenge der Stabilisatorzusammensetzung enthalten.

Erfindungsgemäß geeignet sind beispielsweise Metallhydroxide, Metalloxide, Metallhydrogencarbonate und Metallcarbonate mit einem Metallkation, das aus der Gruppe bestehend aus Be, Mg, Ca, La, Mn, Fe, Co, Ni, Cu, Zn, Al und Sn ausgewählt ist. Beispiele für geeignete Verbindungen sind Mg(OH)₂, Mg₅(CO₃)₄(OH)₂•2H₂O, Ca(OH)₂, Zn(OH)₂, MgO, CaO, Mg(HCO₃), Ca(HCOs), Zn(HCOs), MgCO₃, CaCO₃ oder ZnCO₃. Eine erfindungsgemäße Stabilisatorzusammensetzung kann die genannten Verbindungen jeweils einzeln oder als Gemische aus zwei oder mehr der genannten Verbindungen enthalten, beispielsweise als Gemisch aus zwei, drei, vier oder fünf der genannten Verbindungen.

Bevorzugt enthalten die erfindungsgemäßen Stabilisatorzusammensetzungen Mg(OH)₂.

Die erfindungsgemäßen Stabilisatorzusammensetzungen können die genannten Metallhydroxide, Metalloxide, Metallhydrogencarbonate und Metallcarbonate oder Gemische davon in einer Menge von bis zu etwa 80 Gew.-%, beispielsweise in einer Menge von etwa 0,1 bis etwa 80 Gew.-% oder in einer Menge von etwa 0,5 bis etwa 50 Gew.-% oder in einer Menge von etwa 1 bis etwa 40 Gew.-% oder in einer Menge von etwa 5 bis etwa 20 Gew.-%.

Weiterhin sind als Zusatzstoffe 1,3-Dicarbonylverbindungen, insbesondere β-Diketone und β-Ketoester geeignet. Im Rahmen der vorliegenden Erfindung sind 1,3-Dicarbonylverbindungen der allgemeinen Formel (VI) 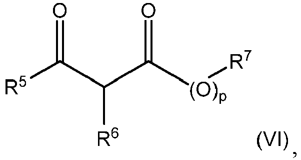 geeignet, worin die Reste R⁵, R⁶ und R⁷ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen, einen gegebenenfalls substituierten Arylrest mit 6 bis 44 C-Atomen oder einen gegebenenfalls substituierten Aralkylrest mit 7 bis 44 C-Atomen stehen, und worin p für 0 oder 1 steht.

Besonders geeignet sind hierbei beispielsweise Acetylaceton, Butanoylaceton, Heptanoylaceton, Stearoylaceton, Palmitoylaceton, Lauroylaceton, 7-tert-Nonylthioheptan-dion-2,4,Benzoylaceton, Dibenzoylmethan, Lauroylbenzoylmethan, Palmitoylbenzoylmethan, Stearoylbenzoylmethan, lsooctylbenzoylmethan, 5-Hydroxycapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis-(cyclohexanoyl)methan, Di-pivaloylmethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, hexyl- oder -octylester.

Besonders bevorzugt enthalten die erfindungsgemäßen Stabilisatorzusammensetzungen Dibenzoylmethan oder Stearoylbenzoylmethan.

1,3-Dicarbonylverbindungen können in einer erfindungsgemäßen Stabilisatorzusammensetzung in einer Menge von bis zu etwa 20 Gew.-%, beispielsweise bis zu etwa 10 Gew.-% bezogen auf die Gesamtmenge der Stabilisatorzusammensetzung enthalten sein.

Weiterhin sind als Zusatzstoffe im Rahmen der vorliegenden Erfindung hetrocyclische Aminoalkohole geeignet. Im Rahmen der vorliegenden Erfindung eignen sich besonders heterocyclische Aminoalkohole, die mindestens 2, vorzugsweise mindestens 3 Aminogroppen im Ring aufweisen. Als zentraler Ringbestandteil der erfindungsgemäß einsetzbaren Aminoalkohole besonders geeignet sind hierbei die Trimerisierungsprodukte von Isocyanaten.

Bevorzugt werden dabei hydroxylgruppenhaltige Isocyanurate der allgemeinen Formel (VII) 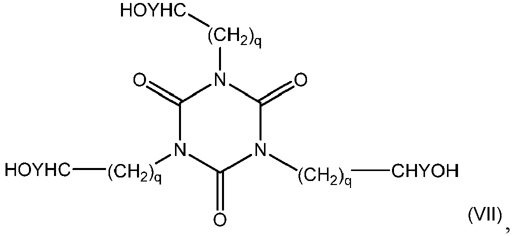 eingesetzt, worin die Gruppen Y und die Indices q jeweils gleich oder verschieden sein können, Y für ein Wasserstoffatom oder eine lineare oder verzweigte, gesättigte oder ungesättigte Alkylgruppe mit 1 bis 10 Kohlenstoffatomen steht, und q für eine ganze Zahl von 0 bis 20 steht.

Besonders bevorzugt enthalten die erfindungsgemäßen Stabilisatorzusammensetzungen Tris(hydroxyethyl)isocyanurat (THEIC).

Heterocyclische Aminoalkohole können in den erfindungsgemäßen Stabilisatorzusammensetzungen in einer Menge von bis zu etwa 20 Gew.-%, beispielsweise bis zu etwa 10 Gew.-% bezogen auf die Stabilisatorzusammensetzung enthalten sein.

Als Zusatzstoffe im Rahmen der vorliegenden Erfindung eignen sich weiterhin beispielsweise Perchlorate der allgemeinen Formel M(ClO₄)ₖ, wobei M für ein geeignetes anorganisches oder organisches Kation steht. Der Index k steht entsprechend der Wertigkeit von M für die Zahl 1, 2 oder 3. Erfindungsgemäß geeignete anorganische Kationen sind beispielsweise Li, Na, K, Mg, Ca, Sr, Zn, Al, La, Ce oder NH₄. Erfindungsgemäß geeignete organische Kationen sind beispielsweise organische Onium-Ionen, wobei unter den Begriff der organischen Onium-Ionen Ammonium-, Sulfonium- und Phosphonium-Ionen fallen. Besonders geeignet im Rahmen der vorliegenden Erfindung sind LiClO₄, NaClO₄, KClO₄ und NH₄ClO₄. Die erfindungsgemäße Stabilisatorzusammensetzung kann nur ein Perchlorat oder eine Mischung aus zwei oder mehr Perchloraten enthalten. Die Stabilisatorzusammensetzung kann im Rahmen der Erfindung ein Perchlorat oder ein Gemisch aus zwei oder mehr Perchloraten in einer Menge von etwa 0,001 Gew.-% bis etwa 2 Gew.-%, insbesondere in einer Menge von etwa 0,002 Gew.-% bis etwa 1 Gew.-% oder in einer Menge von etwa 0,005 Gew.-% bis etwa 0,5 Gew.-% oder in einer Menge von 0,01 Gew.-% bis 0,2 Gew.-% enthalten.

Als Zusatzstoffe sind im Rahmen der Erfindung beispielsweise Epoxyverbindungen geeignet. Beispiele für geeignete Epoxyverbindungen sind epoxydiertes Sojaöl, epoxydiertes Olivenöl, epoxydiertes Leinöl, epoxydiertes Rizinusöl, epoxydiertes Erdnussöl, epoxydiertes Maisöl, epoxydiertes Baumwollsamenöl sowie Glycidylverbindungen.

Als weitere Zusatzstoffe sind beispielsweise Gleitmittel, Weichmacher, Pigmente, Füllstoffe, Antioxidantien, UV-Absorber und Lichtschutzmittel, Treibmittel, Schlagzähmodifikatoren, Verarbeitungshilfen, Antistatika, Biozide, optische Aufheller, Flammschutzmittel, Antifoggingverbindungen und Lösungsmittel geeignet.

Die erfindungsgemäßen Stabilisatorzusammensetzungen können weiterhin Gleitmittel wie Paraffinwachse, Polyethylenwachse, Polypropylenwachse, Montanwachse, Estergleitmittel wie Fettsäureester, gereinigte oder hydrierte natürliche oder synthetische Triglyceride oder Partialester, Amidwachse, Chlorparaffine, Glycerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478-488 beschrieben. Weiterhin als Gleitmittel geeignet sind beispielsweise Fettketone, Gleitmittel auf Silikonbasis oder Kombinationen davon. Besonders geeignet sind im Rahmen der vorliegenden Erfindung Gleitmittel der Produktreihe Baerolub^{®} der Firma Baerlocher GmbH (Unterschleißheim, Deutschland).

Die erfindungsgemäßen Stabilisatorzusammensetzungen können die beschriebenen Gleitmittel in einer Menge von bis zu etwa 70 Gew.-%, insbesondere bis zu etwa 55 Gew.-%, jeweils bezogen auf die gesamte Stabilisatorzusammensetzung, enthalten.

Ebenfalls als Bestandteil der erfindungsgemäßen Stabilisatorzusammensetzungen geeignet sind Pigmente. Beispiele für geeignete anorganische Pigmente sind Titandioxid, Ruß, Fe₂O₃, Sb₂O₃, (Ba,Sb)O₂, Cr₂O₃, Spinelle wie Kobaltblau und Kobaltgrün, Cd(S, Se) oder Ultramarinblau. Als organische Pigmente sind beispielsweise Azopigmente, Phthalocyaninpigmente, Chinacridonpigmente, Perylenpigmente, Diketopyrrolopyrrol-pigmente oder Anthachinonpigmente geeignet.

Die erfindungsgemäßen Stabilisatorzusammensetzungen können weiterhin Füllstoffe, wie sie im "Handbook of PVC Formulating", E. J. Wickson, John Wiley & Sons, Inc., 1993, auf den Seiten 393-449 beschrieben sind, oder Verstärkungsmittel, wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Dolomit, Wollastonit, Silikate, Glasfasern, Talk, Kaolin, Ruß, Graphit, Holzmehl oder andere nachwachsende Rohstoffe.

Die erfindungsgemäßen Stabilisatorzusammensetzungen können als Zusatzstoffe Antioxidantien enthalten. Geeignete Antioxidantien sind beispielsweise die nachfolgend genannten.
1. Alkylierte Monophenole, z.B. 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Dicyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert-butyl-4-methoxymethylphenol, 2,6-Dinonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol, Dodecylphenol und Mischungen davon.
2. Alkylthiomethylphenole, z.B. 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.
3. Alkylierte Hydrochinone, z.B. 2,6-Di-tert-butyl-4-methoxyphenol, 2,5-Di-tert-butylhydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(a-methylcyclohexyl)phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis- [6-(α-methylbenzyl)-4-nonylphenol], 2,2'-Methylen-bis-[6-(α,α-dimethylbenzyl)-4-nonyl-phenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methyl-phenyl)butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)butyrat], Bis-(3-tert-butyl-4-hydroxy-5-methylphenyl)dicyclopentadien, Bis-[2-(3'-tert-butyl-2'-hydroxy-5'-methyl-benzyl)-6-tert-butyl-4-methylphenyl]terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)pentan.
6. Benzylverbindungen, z.B. 3,5,3',5'-Tetra-tert-butyl-4,4'-dihydroxydibenzyl-ether, Octadecyl-4-hydroxy-3,5-dimethylbenzyl-mercaptoacetat, Tris-(3,5-di-tert-butyl-4-hydroxybenzyl)amin, Bis-(4-tert-butyl-3-hydroxy-2,6-dimethylbenzyl)dithioterephthalat, Bis-(3,5-di-tert-butyl-4-hydroxybenzyl)sulfid, Isooctyl-3,5-di-tert-butyl-4-hydroxybenzyl-mercaptoacetat.
7. Hydroxybenzylierte Malonate, z.B. Dioctadecyl-2,2-bis-(3,5-di-tert-butyl-2-hydroxybenzyl)malonat, Dioctadecyl-2-(3-tert-butyl-4-hydroxy-5-methylbenzyl)malonat, Didodecylmercaptoethyl-2,2-bis-(3,5-di-tert-butyl-4-hydroxybenzyl)malonat, Di-[4-(1,1,3,3-tetramethylbutyl)phenyl]-2,2-bis-(3,5-di-tert-butyl-4-hydroxybenzyl)-malonat.
8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-di-methylbenzyl)isocyanurat, 2,4,6-Tris-(3,5-di-tert-butyl-4-hydroxy-phenylethyl)-1,3,5-triazin, 1,3,5-Tris-(3,5-di-tert-butyl-4-hydroxyphenylpropionyl)hexahydro-1,3,5-triazin, 1,3,5-Tris-(3,5-dicyclohexyl-4-hydroxybenzyl)isocyanurat.
10. Phosphonate und Phosphonite, z.B. Dimethyl-2,5-di-tert-butyl-4-hydroxy-benzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzyl-phosphonat, Ca-Salz des 3,5-Di-tert-butyl-4-hydroxybenzylphosphonsäuremonoethylesters, Tetrakis-(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyldibenz[d,g]-1,3,2-dioxaphosphocin.
11. Acylaminophenole, z.B. 4-Hydroxylaurinsäureanilid, 4-Hydroxystearinsäureanilid, N-(3,5-di-tert-butyl-4-hydroxyphenyl)carbaminsäureoctylester.
12. Ester der β-(3,5-Di-tert-butyl-4-hydroxyphenyl)propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit, Tris(hydroxyethyl)-isocyanurat, N,N'-Bis(hydroxyethyl)oxalsäurediamid, 3-Thiaundecanol, 3-Thiapentadecanol, Trimethylhexandiol, Trimethylolpropan, Ditrimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxy)ethyl-isocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxy)ethylisocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxy)ethylisocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3,5-Di-tert-butyl-4-hydroxyphenyl)propionsäure, wie z.B. N,N'-Bis-(3,5-di-tert-butyl-4-hydroxyphenylpropionyl)hexamethylendiamin, N,N'-Bis-(3,5-di-tert-butyl-4-hydroxyphenylpropionyl)trimethylendiamin, N,N'-Bis-(3,5-di-tert-butyl-4-hydroxyphenyl-propionyl)hydrazin.

Bevorzugte Antioxidantien sind solche der genannten Gruppen 1-5, 10 und 12. Besonders bevorzugte Antioxidantien sind 2,2-Bis-(4-hydroxyphenyl)propan, Ester der 3,5-Di-tert-butyl-4-hydroxyphenylpropionsäure mit Octanol, Octadecanol oder Pentaerythrit und Tris-(2,4-di-tert-butylphenyl)-phosphit.

Möglich im Rahmen der vorliegenden Erfindung sind auch Gemische von 2 oder mehr der genannten Antioxidantien.

Die erfindungsgemäßen Stabilisatorzusammensetzungen können als Zusatzstoffe UV-Absorber und Lichtschutzmittel enthalten. Geeignete UV-Absorber und Lichtschutzmittel sind beispielsweise die nachfolgend genannten.
1. 2-(2'-Hydroxyphenyl)benztriazole, wie z.B. 2-(2'-Hydroxy-5'-methylphenyl)benztriazol, 2-(3',5'-Di-tert-butyl-2'-hydroxyphenyl)benztriazol, 2-(5'-tert-Butyl-2'-hydroxyphenyl)-benztriazol, 2-(2'-Hydroxy-5'-(1,1,3,3-tetramethylbutyl)phenyl)benztriazol, 2-(3',5'-Di-tert-butyl-2'-hydroxyphenyl)-5-chlor-benztriazol, 2-(3'-tert-Butyl-2'-hydroxy-5'-methylphenyl)-5-chlorbenztriazol, 2-(3'-sec-Butyl-5'-tert-butyl-2'-hydroxyphenyl)benztriazol, 2-(2'-Hydroxy-4'-octoxyphenyl)benztriazol, 2-(3',5'-Di-tert-amyl-2'-hydroxyphenyl)benztriazol, 2-(3',5'-Bis-(α,α-dimethylbenzyl)-2'-hydroxyphenyl)benztriazol, Mischung aus 2-(3'-tert-Butyl-2'-hydroxy-5'--(2-octyloxycarbonylethyl)phenyl)-5-chlorbenztriazol, 2-(3'-tert-Butyl-5'-[2-(2-ethylhexyloxy)carbonylethyl]-2'-hydroxyphenyl)-5-chlorbenztriazol, 2-(3'-tert-Butyl-2'-hydroxy-5'-(2-methoxycarbonylethyl)phenyl)-5-chlorbenztriazol, 2-(3'-tert-Butyl-2'-hydroxy-5'-(2-methoxycarbonylethyl)phenyl)benztriazol, 2-(3'-tert-Butyl-2'-hydroxy-5'-(2-octyloxy-carbonylethyl)phenyl)benztriazol, 2-(3'-tert-Butyl-5'-[2-(2-ethylhexyloxy)carbonylethyl]-2'-hydroxyphenyl)benztriazol, 2-(3'-Dodecyl-2'-hydroxy-5'-methylphenyl)benztriazol, und 2-(3'-tert-Butyl-2'-hydroxy-5'-(2-isooctyloxycarbonylethyl)phenylbenztriazol, 2,2'-Methylen-bis[4-(1,1,3,3-tetramethylbutyl)-6-benztriazol-2-ylphenol], Umesterungsprodukt von 2-[3'-tert-Butyl-5'-(2-methoxycarbonylethyl)-2'-hydroxy-phenyl]-benztriazol mit Polyethylenglycol 300; mit R = 3'-tert-Butyl-4'-hydroxy-5'-2H-benztriazol-2-ylphenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butylphenylsalicylat, Phenylsalicylat, Octylphenylsalicylat, Dibenzoylresorcin, Bis(4-tert-butylbenzoyl)resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. α-Cyan-β,β-diphenylacrylsäureethylester bzw. -isooctylester, α-Carbomethoxyzimtsäuremethylester, α-Cyano-β-methyl-p-methoxyzimtsäuremethylester oder -butylester, α-Carbomethoxy-p-methoxyzimtsäuremethylester, N-(β-Carbomethoxy-β-cyanovinyl)-2-methylindolin.
5. Nickelverbindungen, wie z.B. Nickelkomplexe des 2,2'-Thio-bis-[4-(1,1,3,3-tetramethylbutyl)phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphon-säuremonoalkylestern, wie vom Methyl- oder Ethylester, Nickelkomplexe von Ketoximen, wie von 2-Hydroxy-4-methylphenylundecylketoxim, Nickelkomplexe des 1-Phenyl-4-lauroyl-5-hydroxypyrazols, gegebenenfalls mit zusätzlichen Liganden.
6. Sterisch gehinderte Amine, wie z.B. Bis-(2,2,6,6-tetramethyl-piperidyl)sebacat, Bis-(2,2,6,6-tetramethyl-piperidyl)succinat, Bis-(1,2,2,6,6-pentamethylpiperidyl)sebacat, n-Butyl-3,5-di-tert-butyl-4-hydroxybenzylmalonsäure-bis(1,2,2,6,6-pentamethylpiperidyl)ester,
   Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, Bis-(1,2,2,6,6-pentamethyl-piperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)succinat, Kondensationsprodukt aus N,N'-Bis-(2,2,6,6-tetramethyl-4-piperidyl)hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)ethan, 8-Acetyl-3-dodecyl-7,7,9,9-tetramethyl-1,3,8-triazas-piro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion.
7. Oxalsäurediamide, wie z.B. 4,4'-Dioctyloxyoxanilid, 2,2'-Dioctyloxy-5,5'-di-tert-butyl-oxanilid, 2,2'-Didodecyloxy-5,5'di-tert-butyloxanilid, 2-Ethoxy-2'-ethyloxanilid, N,N'-Bis-(3-dimethylaminopropyl)oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy disubstituierten Oxaniliden.
8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-Hydroxy-4-(2-hydroxy-3-butyloxypropyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin.

Als Treibmittel eignen sich beispielsweise organische Azo- und Hydrazoverbindungen, Tetrazole, Oxazine, lsatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Dimethylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 Kohlenstoffatomen im Esteralkohol oder Gemische von Alkylphthalaten mit 6 bis 10 und 8 bis 10 Kohlenstoffatomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon.

Beispiele für derartige Weichmacher sind Di-2-ethylhexyladipat, Di-isooctyladipat, Di-isononyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen der vorliegenden Erfindung Di-2-ethylhexylazelat und Di-iso-octyladipat.

Ebenfalls als Weichmacher geeignet sind Citratester wie Triethylcitrat, Tributylcitrat, Acetyltriethylcitrat, Acetyl-tri(n-butyl)citrat, Acetyl-tri(n-hexyl)citrat, Acetyl-tri(2-ethyl hexyl)citrat, n-Butyryl-tri(n-hexyl)citrat, Acetyl-tri(n-hexyl-octyl-decyl)citrat oder Acetyl-tri(n-octyl-decyl)citrat.

Ebenfalls als Weichmacher geeignet sind Cyclohexandicarbonsäureester. Bevorzugt sind Cyclohexandicarbonsäureester mit 6 bis 8, 6 bis 10, 7 bis 9 oder 9 bis 11 C-Atomen in der Estergruppe oder Gemische aus zwei oder mehr davon.

Darüber hinaus eignen sich als Weichmacher Trimellithsäureester wie Tri-2-ethylhexyltrimellithat, Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethylhexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-%, jeweils bezogen auf die gesamte Stabilisatorzusammensetzung, enthalten. Bevorzugt beträgt die Untergrenze für die beschriebenen Weichmacher als Bestandteil der erfindungsgemäßen Stabilisatorzusammensetzungen etwa 0,1 Gew.-%, beispielsweise etwa 0,5 Gew.-%, 1 Gew.-%, 2 Gew.-% oder 5 Gew.-%, jeweils bezogen auf die gesamte Stabilisatorzusammensetzung.

Die erfindungsgemäßen Stabilisatorzusammensetzungen können in festem oder flüssigem Zustand vorliegen.

Entsprechend können die erfindungsgemäßen Zusammensetzungen je nach Aggregatszustand beispielsweise eines oder mehrere der nachfolgend aufgezählten Lösungsmittel enthalten. Unter einem "Lösungsmittel" wird im Rahmen der vorliegenden Erfindung eine Verbindung oder ein Gemisch aus zwei oder mehr Verbindungen verstanden, das innerhalb eines bestimmten Temperaturbereichs flüssig und dazu in der Lage ist, das mindestens eine, im Rahmen der vorliegenden erfindungsgemäßen Stabilisatorzusammensetzung eingesetzte Salz einer Dicarbonsäure oder eines Dicarbonsäuremonoesters entsprechend einer der Formeln (I) oder (II), zu lösen. Ein im Rahmen der vorliegenden Erfindung geeignetes Lösungsmittel ist mindestens innerhalb eines Temperaturbereichs von etwa 45 bis etwa 100°C, vorzugsweise innerhalb eines Temperaturbereichs von etwa 30 bis etwa 120°C, beispielsweise innerhalb eines Temperaturbereichs von etwa 15 bis etwa 150°C und insbesondere innerhalb eines Temperaturbereichs von etwa 0 bis etwa 200°C flüssig.

Als Lösungsmittel sind sowohl anorganische als auch organische Lösungsmittel sowie deren Gemische geeignet. Erfindungsgemäß geeignete Lösungsmittel sind beispielsweise polare organische Lösungsmittel. Als polare organische Lösungsmittel sind erfindungsgemäß alle Lösungsmittel geeignet, deren Moleküle ein elektrisches Dipolmoment aufweisen, beispielsweise polare organische Lösungsmittel mit elektronegativen Heteroatomen wie O, S, N, P, F, Cl, Br.

Als Lösungsmittel im Rahmen der vorliegenden Erfindung sind beispielsweise die nachfolgend aufgezählten Verbindungen geeignet: 2-Hydroxy-5-methyl-benzoesäuremethylester, 2-Ethoxybenzylalkohol, N-Ethyl-2,3-dimethylanilin, 2-Hydroxy-3-methyl-benzoesäuremethylester, Laurinsäurebenzylester, 3,4,5-Trimethoxybenzylalkohol, 3,5-Dimethylbenzylalkohol, 3-Methylbenzophenon, 2-Methoxyactetophenon, 3-Cyclohexylpropionsäure, Cyclopentancarbonsäure, 2,5-Dimethylbenzonitril, 4-(4-Methoxyphenyl)-butan-2-on, Ameisensäurezimtester, Triethylcitrat, Decandisäuredibutylester, Heptaethylenglykol, Decandisäurediethylester, Adipinsäuredibutylester, 1,2-Bis(2-acetoxy-ethoxy)-ethan, Azelainsäurediethylester, Korksäurediethylester, Glutarsäurediethylester, Myristinsäureethylester, Oxalsäuredibutylester, 9-Decenylpropionat, Laurinsäuremethylester, Essigsäuredecylester, Cyanessigsäurebutylester, Hexansäurepentylester, Essigsäurenonylester, Decansäuremethylester, Nonansäuremethylester, Undecylenalkohol, N-Methyldioctylamin, Diethylenglykoldibutylether, Dioctylether, Decan-3-on, 4-Oxa-Heptandinitril, Nonannitril, Diethylenglykolmonohexylether, Diisobutylketon, Ameisensäurebutylester, n-Tridecylalkohol, Butylcarbitol, Glutarsäuredinitril, Propionsäuremethylester, Thioameisensäuredimethylamid, Octamethylendimercaptan, 2-Ethylhexan-1 ,3-diol, Decan-4-ol, Decan-1-thiol, Hexamethylendimercaptan, Trimethylenjodid, Dodecan-2-ol, N-Butylformamid, Diisopentylsulfid, Hexaethylenglycol, Pentaethylenglykol, Trioctylamin, Dipropylentriamin, Triethylenglykol, Dodecylmercaptan, 2,2'-Dithiodiglykol, Diethylcarbonat, m-Tolylisothiocyanat, Linolensäure, Triethylentetramin, 5H-Furan-2-on, 4-Benzylpiperidin, 1-Phenylpiperidin, lsonikotinsäureethylester, Pyridin-2-carbonsäureethylester, 2,3,3-Trimethyi-3H-indol, 3-Methylsulfolan, Propylencarbonat, 3-Piperidinopropionitril, Sulfolan, Tetrahydrothiophen-1-oxid, 4-Morpholinoethanol und 4-Octylanilin.

Ebenfalls als Lösungsmittel geeignet sind aliphatische Aminoalkohole, beispielsweise Aminomonoalkohole oder Aminopolyole mit 2 bis 40, vorzugsweise 2 bis 20 Kohlenstoffatomen, beispielsweise Ethanolamin, Diethanolamin, Triethanolamin, Triisopropanolamin, Tri-n-propanolamin, Tributanolamin, Tripentanolamin, 1-Amino-3,3-dimethyl-pentan-5-ol, 2-Aminohexan-2',2"-diethanolamin, 1-Amino-2,5-dimethylcyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol. Weiterhin geeignet sind aromatisch-aliphatische oder aromatisch-cycloaliphatische Aminoalkohole mit 6 bis 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Die oben genannten Lösungsmittel können in einer erfindungsgemäßen Stabilisatorzusammensetzung jeweils alleine oder als Gemisch aus zwei oder mehr davon vorliegen. Wenn es sich bei einer erfindungsgemäßen Stabilisatorzusammensetzung um eine flüssige Stabilisatorzusammensetzung handelt, die zwei oder mehr der oben genannten Verbindungen als Lösungsmittel enthält, so kann eine der Verbindungen oder mehrere der Verbindungen außerhalb der oben genannten Definition des Begriffs "flüssig" liegen, sofern das gesamte Lösungsmittelgemisch innerhalb dieser Definition liegt.

Die erfindungsgemäßen Stabilisatorzusammensetzungen können Lösungsmittel oder Lösungsmittelgemische in einer Menge von etwa 0,01 Gew.-% bis etwa 99,9 Gew.-%, beispielsweise etwa 1 Gew.-% bis etwa 98 Gew.-% oder etwa 5 Gew.-% bis etwa 95 Gew.-% enthalten. Der Gehalt an Lösungsmittel kann in weiten Grenzen variieren, je nachdem, ob die erfindungsgemäße Stabilisatorzusammensetzung als alleiniger Stabilisator oder zusammen mit einem oder mehreren Zusatzstoffen eingesetzt wird oder in einem festen oder flüssigen Zustand vorliegen soll. So können flüssige erfindungsgemäße Stabilisatorzusammensetzungen beispielsweise einen Anteil an Lösungsmittel von etwa 20 Gew.-% bis etwa 99,9 Gew.-% oder etwa 30 Gew.-% bis etwa 99 Gew.-% oder etwa 35 Gew.-% bis etwa 95 Gew.-% oder etwa 40 Gew.-% bis etwa 90 Gew.-% oder etwa 50 Gew.-% bis etwa 85 Gew.-% aufweisen. Bei festen erfindungsgemäßen Stabilisatorzusammensetzungen kann der Anteil an Lösungsmittel beispielsweise etwa 0,01 Gew.-% bis etwa 50 Gew.-% oder etwa 0,1 Gew.-% bis etwa 45 Gew.- % oder etwa 1 Gew.-% bis etwa 40 Gew.% oder etwa 3 Gew.-% bis etwa 35 Gew.-% oder etwa 5 Gew.-% bis etwa 30 Gew.-% betragen.

Die erfindungsgemäßen Stabilisatorzusammensetzungen können darüber hinaus noch Schlagzähmodifikatoren, Verarbeitungshilfen, Antistatika, Biozide, optische Aufheller, Flammschutzmittel sowie Antifoggingverbindungen als Zusatzstoffe enthalten. Geeignete Verbindungen dieser Verbindungsklassen sind beispielsweise in "Plastics Additives", R. Gächter/H. Müller, Hanser Publishers, 3rd Edition, 1990, Seiten 498-499, 506-514, 714-725, 753-754, 779, 796-797, sowie im "Handbook of Vinyl Formulating", R. F. Grossmann, Wiley lnterscience, 2nd Edition, 2008 auf den Seiten 149-150, 310-312, 315-319,350-358,362-363, 398-399 403-414 und 505 beschrieben.

Im Rahmen der vorliegenden Erfindungen können die erfindungsgemäßen Stabilisatorzusammensetzungen daher als Zusatzstoffe mindestens ein Ca- oder Zn-Salz einer organischen Carbonsäure mit 8 bis 20 Kohlenstoffatomen und mindestens einen der genannten weiteren Zusatzstoffe oder mindestens ein Uracil oder Uracil-Derivat und mindestens einen der genannten weiteren Zusatzstoff oder mindestens ein Ca- oder Zn-Salz einer organischen Carbonsäure mit 8 bis 20 Kohlenstoffatomen und mindestens ein Uracil oder Uracil-Derivat und mindestens einen der genannten weiteren Zusatzstoff enthalten.

Die erfindungsgemäßen Stabilisatorzusammensetzungen eignen sich beispielsweise zur Stabilisierung halogenhaltiger Polymerer. Die vorliegende Erfindung betrifft daher weiterhin die Verwendung einer erfindungsgemäßen Stabilisatorzusammensetzung zur Stabilisierung halogenhaltiger Polymerer.

Im Rahmen der Erfindung einsetzbare halogenhaltige Polymere sind Polymere des Vinylchlorids, Vinylharze, die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, nachchlorierte Polymere oder Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere Vinylacetats, chlorierte polymere Ester der Acrylsäure und der α-substituierten Acrylsäuren, chlorierte Polystyrole, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der oben genannten Polymere enthalten.

Ebenfalls zur Stabilisierung mit den erfindungsgemäßen Stabilisatorzusammensetzungen geeignet sind Gemische von halogenierten und nicht halogenierten Polymeren.

Weiterhin können mit den erfindungsgemäßen Stabilisatorzusammensetzungen auch Recyclate halogenhaltiger Polymerer stabilisiert werden, wobei grundsätzlich alle Recyclate der oben genannten, halogenierten Polymeren hierzu geeignet sind. Geeignet im Rahmen der vorliegenden Erfindung ist beispielsweise ein PVC-Recyclat.

Besonders bevorzugt im Rahmen der vorliegenden Erfindung werden die erfindungsgemäßen Stabilisatorzusammensetzungen zur Stabilisierung von PVC und nachchloriertem PVC verwendet.

Ein weiterer Gegenstand der vorliegenden Erfindung ist eine Polymerzusammensetzung, die mindestens ein halogenhaltiges Polymeres und eine erfindungsgemäße Stabilisatorzusammensetzung enthält.

Im Rahmen der vorliegenden Erfindung enthält die Polymerzusammensetzung als halogenhaltiges Polymeres zumindest anteilsweise PVC oder nachchloriertes PVC, wobei der Anteil von PVC oder nachchloriertem PVC beispielsweise mindestens etwa 20 Gew.-%, insbesondere mindestens etwa 50 Gew.-% oder mindestens etwa 80 Gew.-% oder mindestens etwa 90 Gew.-%, jeweils bezogen auf die gesamte Polymerzusammensetzung, beträgt.

Im Rahmen der vorliegenden Erfindung enthält die Polymerzusammensetzung die erfindungsgemäße Stabilisatorzusammensetzung beispielsweise in einer Menge von etwa 0,1 bis etwa 20 phr, bevorzugt in einer Menge von etwa 0,2 bis etwa 10 phr oder in einer Menge von etwa 0,5 bis etwa 5 phr oder in einer Menge von etwa 1 bis etwa 5 phr, bezogen auf die Gesamtmenge des Polymeren.

Die Einheit phr steht für "per hundred resin" und betrifft damit die Gewichtsteile pro 100 Gewichtsteile des Polymeren.

Im Rahmen der vorliegenden Erfindung enthält die Polymerzusammensetzung ein Salz einer Dicarbonsäure oder des Dicarbonsäuremonoesters entsprechend einer der Formeln (I) oder (II) beispielsweise in einer Menge von etwa 0,01 bis etwa 15 phr, bevorzugt in einer Menge von etwa 0,02 bis etwa 10 phr oder in einer Menge von etwa 0,05 bis etwa 5 phr oder in einer Menge von etwa 0,08 bis etwa 2 phr, oder in einer Menge von etwa 0,1 bis etwa 1 phr, jeweils bezogen auf die Gesamtmenge des Polymeren.

Weiterhin enthält die Polymerzusammensetzung ein Polyol im Sinne der vorliegenden Erfindung beispielsweise in einer Menge von etwa 0,01 bis etwa 15 phr, bevorzugt in einer Menge von etwa 0,02 bis etwa 10 phr oder in einer Menge von etwa 0,05 bis etwa 5 phr oder in einer Menge von etwa 0,08 bis etwa 2 phr, oder in einer Menge von etwa 0,1 bis etwa 1 phr, jeweils bezogen auf die Gesamtmenge des Polymeren.

Im Rahmen der vorliegenden Erfindung enthält die Polymerzusammensetzung einen Zusatzstoff oder ein Gemisch von zwei oder mehr Zusatzstoffen beispielsweise in einer Menge von bis zu etwa 15 phr, bevorzugt in einer Menge von etwa 0,001 bis etwa 10 phr, etwa 0,005 bis etwa 7 phr oder in einer Menge von etwa 0,01 bis etwa 5 phr oder in einer Menge von etwa 0,05 bis etwa 3 phr, oder in einer Menge von etwa 0,1 bis etwa 2,5 phr, jeweils bezogen auf die Gesamtmenge des Polymeren.

Im Rahmen der vorliegenden Erfindung enthält die Polymerzusammensetzung Ca- oder Zn-Stearat oder ein Gemisch davon beispielsweise in einer Menge von bis zu etwa 15 phr, bevorzugt in einer Menge von etwa 0,01 bis etwa 10 phr, etwa 0,05 bis etwa 5 phr oder in einer Menge von etwa 0,1 bis etwa 3 phr oder in einer Menge von etwa 0,2 bis etwa 2 phr, oder in einer Menge von etwa 0,1 bis etwa 1,5 phr, jeweils bezogen auf die Gesamtmenge des Polymeren.

Im Rahmen der vorliegenden Erfindung enthält die Polymerzusammensetzung Uracil oder ein Uracil-Derivat oder ein Gemisch aus zwei oder mehr davon beispielsweise in einer Menge von bis zu etwa 15 phr, bevorzugt in einer Menge von etwa 0,001 bis etwa 10 phr, etwa 0,005 bis etwa 5 phr oder in einer Menge von etwa 0,01 bis etwa 2 phr oder in einer Menge von etwa 0,02 bis etwa 1 phr, oder in einer Menge von etwa 0,05 bis etwa 0,5 phr, jeweils bezogen auf die Gesamtmenge des Polymeren.

Ein weiterer Gegenstand der vorliegenden Erfindung ist ein Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer erfindungsgemäßen Stabilisatorzusammensetzung vermischt wird.

Das Vermischen der im Rahmen der Erfindung einsetzbaren halogenhaltigen Polymeren und der erfindungsgemäßen Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden halogenhaltigen Polymeren vor der Verarbeitung zugemischt werden. Es ist jedoch ebenso möglich, die Stabilisatorzusammensetzung dem halogenhaltigen Polymeren in erweichtem oder geschmolzenem Zustand, beispielsweise während der Verarbeitung in einem Extruder, als Emulsion oder Dispersion, als pastöse Mischung, als trockene Mischung, als Lösung oder als Schmelze zuzusetzen.

Gegenstand der vorliegenden Erfindung ist daher auch ein Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehr halogenhaltigen und einem oder mehr halogenfreien Polymeren mit einer erfindungsgemäßen Stabilisatorzusammensetzung vermischt wird.

Die erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusionsblasen oder das Plastisol-Verfahren. In Rahmen der vorliegenden Erfindung kann die erfindungsgemäße Polymerzusammensetzung beispielsweise zur Herstellung von Schaumstoffen und Formkörpern verwendet werden. Grundsätzlich eignet sich die erfindungsgemäße Polymerzusammensetzung zur Herstellung von hart- und weich-PVC, insbesondere zur Herstellung von hart-PVC.

Zusammensetzungen, die die erfindungsgemäßen Stabilisatorzusammensetzungen enthalten, können zu Formkörpern verarbeitet werden. Ein weiterer Gegenstand der vorliegenden Erfindung ist daher auch die Bereitstellung eines Formkörpers, der die erfindungsgemäße Stabilisatorzusammensetzung enthält.

Der Begriff "Formkörper" umfasst im Rahmen der vorliegenden Erfindung grundsätzlich alle dreidimensionalen Gebilde, die aus einer erfindungsgemäßen Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge. Beispielsweise werden die erfindungsgemäßen Stabilisatorzusammensetzungen zur Herstellung von Formteilen wie Fensterprofilen, technischen Profilen, Rohren, Fittingen und Platten eingesetzt.

### BEISPIELE

Zur Überprüfung der Wirksamkeit der Stabilisatorzusammensetzungen wurden die im Folgenden beschriebenen Rezepturen angefertigt und die thermische Stabilität der mit ihnen stabilisierten Polymeren untersucht. Alle Mengenangaben beziehen sich auf 100 Teile des Polymeren (phr).

Die in den jeweiligen Rezepturen aufgeführten Komponenten wurden mit den entsprechenden Testsubstanzen entsprechend den Tabellen verwogen und im Mixer (Vorwerk Thermomix) für 2 min homogenisiert. Die Mischungen wurden auf einem Mischwalzwerk bei 190°C für 3 min gewalzt.

Die thermische Stabilität der erhaltenen Walzfelle wurde durch Bestimmung der Kongorot-Werte (DIN VDE 0472 Teil 614 bei 180°C) untersucht.

In den Tabellen 1 bis 7 sind die Kongorot-Werte der jeweiligen Zusammensetzungen aufgeführt. Zusammensetzungen, die keine Verbindungen gemäß der vorliegenden Erfindung betreffen, sind als Vergleichszusammensetzungen durch ein "V" vor der jeweiligen Versuchsnummer gekennzeichnet.

### Beispiel 1

| | |
|---|---|
| PVC K 57 | 100,0 phr |
| Kreide mit Oberflächenbehandlung | 2,0 phr |
| Gefällte Kreide | 2,0 phr |
| Glycerintristearat | 0,5 phr |
| Fließhilfe auf Acrylatbasis | 0,5 phr |
| Zinkstearat | 1,0 phr |

**Tabelle 1: synergistische Wirkung von Dinatriumsuccinat und Dipentaerythritol**

| Zusammensetzung | Dinatriumsuccinat [phr] | Dipentaerythritol [phr] | Kongorot bei 180 °C [min] |
|---|---|---|---|
| Kontrolle | | | 8 |
| V1 | 0,10 | | 13 |
| V2 | 0,35 | | 29 |
| V3 | 0,70 | | 39 |
| V4 | | 0,35 | 20 |
| V5 | | 0,60 | 32 |
| V6 | | 0,70 | 38 |
| 1 | 0,10 | 0,60 | 51 |
| 2 | 0,20 | 0,50 | 53 |
| 3 | 0,35 | 0,35 | 56 |
| 4 | 0,50 | 0,20 | 47 |
| 5 | 0,60 | 0,10 | 46 |

**Tabelle 2: synergistische Wirkung von Dinatriumadipat und Dipentaerythritol**

| Zusammensetzung | Dinatriumadipat [phr] | Dipentaerythritol [phr] | Kongorot bei 180 °C [min] |
|---|---|---|---|
| Kontrolle | | | 8 |
| V7 | 0,10 | | 14 |
| V8 | 0,70 | | 33 |
| V4 | | 0,35 | 20 |
| V5 | | 0,60 | 32 |
| V6 | | 0,70 | 38 |
| 6 | 0,10 | 0,60 | 46 |
| 7 | 0,35 | 0,35 | 50 |

**Tabelle 3: Einfluss verschiedener Polyole auf die Wirkung der Stabilisatorzusammensetzungen mit jeweils 0,1 phr Dinatriumadipat**

| Zusammensetzung | V7 | V8 | V9 | V10 | 6 | 8 | 9 | Kongorot bei 180°C [min] |
|---|---|---|---|---|---|---|---|---|
| Trimethylolpropan [phr] | 0,60 | | | | | | | 22 |
| Pentrarythritoldistearat [phr] | | 0,60 | | | | | | 15 |
| Glycerinmonostearat [phr] | | | 0,60 | | | | | 15 |
| THEIC [phr] | | | | 0,60 | | | | 26 |
| Dipentaerythritol [phr] | | | | | 0,60 | | | 46 |
| Pentaerythrit [phr] | | | | | | 0,60 | | 38 |
| Malitol [phr] | | | | | | | 0,60 | 51 |

**Tabelle 4: Einfluss verschiedener Polyole auf die Wirkung der Stabilisatorzusammensetzungen mit jeweils 0,1 phr Dinatriumsuccinat**

| Zusammensetzung | V11 | 1 | Kongorot bei 180°C [min] |
|---|---|---|---|
| Dipentaerythritol [phr] | | 0,60 | 51 |
| THEIC [phr] | 0,60 | | 25 |

### Beispiel 2

| | |
|---|---|
| PVC K 57 | 100,0 phr |
| Kreide mit Oberflächenbehandlung | 2,0 phr |
| Gefällte Kreide | 2,0 phr |
| Glycerintristearat | 0,5 phr |
| Fließhilfe auf Acrylatbasis | 0,5 phr |
| Zinkstearat | 1,0 phr |
| Dipentaerythritol | 0,6 phr |

**Tabelle 5: Einfluss verschiedener Natriumsalze auf die Wirkung der Stabilisatorzusammensetzung mit jeweils 0,6 phr Dipentaerythritol**

| Zusammensetzung | V7 | V8 | V9 | 10 | 11 | Kongorot bei 180°C [min] |
|---|---|---|---|---|---|---|
| Kontrolle | | | | | | 32 |
| Dinatriumfumarat [phr] | 0,10 | | | | | 33 |
| Natriumformiat [phr] | | 0,10 | | | | 36 |
| Dinatriummalonat [phr] | | | 0,10 | | | 31 |
| Dinatriumsuccinat [phr] | | | | 0,10 | | 51 |
| Dinatriumadipat [phr] | | | | | 0,10 | 46 |

### Beispiel 3

| | |
|---|---|
| PVC K 57 | 100,0 phr |
| Kreide mit Oberflächenbehandlung | 2,0 phr |
| Gefällte Kreide | 2,0 phr |
| Glycerintristearat | 0,5 phr |
| Fließhilfe auf Acrylatbasis | 0,5 phr |
| gehärtetes Ricinusöl | 0,5 phr |
| Dipentaerythritol | 0,6 phr |

**Tabelle 6: Einfluss von Calciumstearat und Uracil auf die Wirkung der Stabilisatorzusammensetzung mit verschiedenen Mengen Dinatriumsuccinat**

| Zusammensetzung | Dinatriumsuccinat [phr] | Ca-Stearat [phr] | Baerostab ASM 715 | Uracil | Kongorot bei 180 °C [min] |
|---|---|---|---|---|---|
| 12 | 0,1 | | | | 29 |
| 13 | 0,1 | 0,5 | | | 31 |
| 14 | 0,1 | | 0,1 | 0,05 | 48 |
| 15 | 0,3 | | | | 37 |
| 16 | 0,3 | 0,5 | | | 37 |
| 17 | 0,3 | | 0,1 | 0,05 | 56 |
| 18 | 0,6 | | | | 39 |
| 19 | 0,6 | 0,5 | | | 49 |
| 20 | 0,6 | | 0,1 | 0,05 | 64 |

| | | | | | |
|---|---|---|---|---|---|
| Baerostab ASM 715 = 9,5 % Natriumperchlorat, 90,5 % anorganisches Trägermaterial | | | | | |

### Beispiel 4

| | |
|---|---|
| PVC K 57 | 100,0 phr |
| Kreide mit Oberflächenbehandlung | 2,0 phr |
| Gefällte Kreide | 2,0 phr |
| Glycerintristearat | 0,5 phr |
| Dipentaerythritol | 0,2 phr |
| Zinkstearat | 1,0 phr |
| Calciumstearat | 0,5 phr |

**Tabelle 7: Einfluss verschiedener Natriumsalze auf die Wirkung der Stabilisatorzusammensetzung in Anwesenheit von Zinkstearat und Calciumstearat**

| Zusammensetzung | Dinatriumsuccinat [phr] | Dinatriumadipat [phr] | Dinatriumfumarat [phr] | Natriumbenzoat [phr] | Natriumcitrat [phr] | Kongorot bei 180 °C [min] |
|---|---|---|---|---|---|---|
| Kontrolle | | | | | | 30 |
| V10 | | | 0,5 | | | 32 |
| V11 | | | | 0,5 | | 39 |
| V12 | | | | | 0,5 | 36 |
| 21 | 0,5 | | | | | 57 |
| 22 | | 0,5 | | | | 47 |

## Patentansprüche

1. Stabilisatorzusammensetzung zur Stabilisierung halogenhaltiger Polymerer enthaltend
a) mindestens ein Salz einer Dicarbonsäure oder eines Dicarbonsäuremonoesters der allgemeinen Formel (I) oder (II) 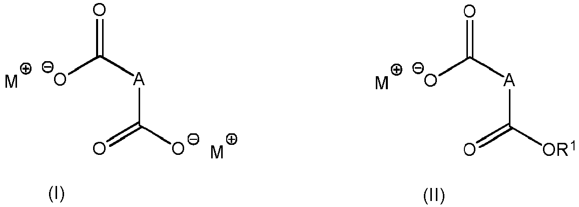 oder ein Gemisch aus zwei oder mehr davon,
wobei M⁺ für Li⁺, Na⁺, K⁺, NH₄⁺ oder ein organisches Kation steht,
R¹ für Wasserstoff, substituierte oder unsubstituierte, lineare oder verzweigte, gesättigte oder ungesättigte aliphatische Alkylreste mit 1 bis 44 Kohlenstoffatomen, substituierte oder unsubstituierte, gesättigte oder ungesättigte Cycloalkylreste mit 5 bis 44 Kohlenstoffatomen, substituierte oder unsubstituierte Arylreste mit 5 bis 44 Kohlenstoffatomen, substituierte oder unsubstituierte Aralkylreste mit 6 bis 44 Kohlenstoffatomen, substituierte oder unsubstituierte, lineare oder verzweigte Alkenylreste mit 2 bis 44 Kohlenstoffatomen oder substituierte oder unsubstituierte, lineare oder verzweigte Alkinylreste mit 6 bis 44 Kohlenstoffatomen steht, und
A für eine Kohlenstoffkette aus mindestens zwei Kohlenstoffatomen steht,
wobei die kürzeste Verbindung zwischen den Carboxylatgruppen eine gesättigte Kohlenstoffkette aus mindestens zwei Kohlenstoffatomen ist,
wobei jedes der mindestens zwei Kohlenstoffatome der kürzesten Verbindung zwischen den Carboxylatgruppen unabhängig voneinander zwei Reste R² und R³ trägt, und
die Reste R² und R³ der mindestens zwei Kohlenstoffatome der kürzesten Verbindung zwischen den Carboxylatgruppen unabhängig voneinander Wasserstoff, substituierte oder unsubstituierte, lineare oder verzweigte, gesättigte oder ungesättigte aliphatische Alkylreste mit 1 bis 44 Kohlenstoffatomen, substituierte oder unsubstituierte, gesättigte oder ungesättigte Cycloalkylreste mit 5 bis 44 Kohlenstoffatomen, substituierte oder unsubstituierte Arylreste mit 5 bis 44 Kohlenstoffatomen, substituierte oder unsubstituierte Aralkylreste mit 6 bis 44 Kohlenstoffatomen, substituierte oder unsubstituierte, lineare oder verzweigte Alkenylreste mit 2 bis 44 Kohlenstoffatomen, substituierte oder unsubstituierte, lineare oder verzweigte Alkinylreste mit 6 bis 44 Kohlenstoffatomen sind, oder derart miteinander zu einem substituierten oder unsubstituierten, gesättigten oder ungesättigten cyclischen System mit 5 bis 44 Kohlenstoffatomen verbunden sind, dass sie mindestens zwei Kohlenstoffatome der gesättigten Kohlenstoffkette aus mindestens zwei Kohlenstoffatomen in das cyclische System einschließen, und
b) mindestens ein Polyol, wobei das Polyol mindestens drei Hydroxygruppen enthält und wobei jedes primäre, sekundäre oder tertiäre Kohlenstoffatom des Polyols eine Einfachbindung zu einem Sauerstoffatom oder zwei Einfachbindungen zu jeweils einem Sauerstoffatom bildet.

2. Stabilisatorzusammensetzung gemäß Anspruch 1, **dadurch gekennzeichnet, dass** M⁺ für Na⁺ oder K⁺ steht.

3. Stabilisatorzusammensetzung gemäß einem der Ansprüche 1 oder 2, **dadurch gekennzeichnet, dass** die Reste R² und R³ jedes der mindestens zwei Kohlenstoffatome der kürzesten Verbindung zwischen den Carboxylatgruppen für Wasserstoff stehen.

4. Stabilisatorzusammensetzung gemäß einem der Ansprüche 1 bis 3, **dadurch gekennzeichnet, dass** das Salz einer Dicarbonsäure oder eines Dicarbonsäuremonoesters entsprechend einer der Formeln (I) oder (II) aus der Gruppe bestehend aus Dinatriumadipat, Dinatriumsuccinat, dem Mononatriumsalz der Adipinsäure, dem Mononatriumsalz der Bernsteinsäure, Mononatriumsalzen von Adipinsäuremonoestern und Mononatriumsalzen von Bernsteinsäuremonoestern ausgewählt ist.

5. Stabilisatorzusammensetzung gemäß Anspruch 4, **dadurch gekennzeichnet, dass** die Estersubstituenten der Adipinsäuremonoester und der Bernsteinsäuremonoester aus der Gruppe bestehend aus substituierten oder unsubstituierten, linearen oder verzweigten, gesättigten oder ungesättigten aliphatischen Alkylresten mit 1 bis 44 Kohlenstoffatomen, substituierten oder unsubstituierten, gesättigten oder ungesättigten Cycloalkylresten mit 5 bis 44 Kohlenstoffatomen und substituierten oder unsubstituierten Arylresten mit 5 bis 44 Kohlenstoffatomen ausgewählt ist.

6. Stabilisatorzusammensetzung gemäß einem der Ansprüche 1 bis 5, **dadurch gekennzeichnet, dass** das Salz einer Dicarbonsäure oder eines Dicarbonsäuremonoesters in einer Menge von 0,1-50 Gew.-% bezogen auf die Gesamtmenge der Stabilisatorzusammensetzung enthalten ist.

7. Stabilisatorzusammensetzung gemäß einem der Ansprüche 1 bis 6, **dadurch gekennzeichnet, dass** das Polyol aus der Gruppe bestehend aus Pentaerythritol, Dipentaerythritol und Zuckeralkoholen ausgewählt ist.

8. Stabilisatorzusammensetzung gemäß einem der Ansprüche 1 bis 7, **dadurch gekennzeichnet, dass** das Polyol in einer Menge von 0,1-25 Gew.-% bezogen auf die Gesamtmenge der Stabilisatorzusammensetzung enthalten ist.

9. Stabilisatorzusammensetzung gemäß einem der Ansprüche 1 bis 98, **dadurch gekennzeichnet, dass** mindestens ein Ca- oder Zn-Salz einer organischen Carbonsäure mit 8 bis 20 C-Atomen oder ein Gemisch aus zwei oder mehr davon enthalten ist, bevorzugt Ca-Stearat, Zn-Stearat oder ein Gemisch aus Ca- und Zn-Stearat.

10. Stabilisatorzusammensetzung gemäß einem der Ansprüche 1 bis 9, **dadurch gekennzeichnet, dass** Uracil oder mindestens ein Uracil-Derivat enthalten ist.

11. Verwendung einer Stabilisatorzusammensetzung gemäß einem der Ansprüche 1 bis 10 zur Stabilisierung halogenhaltiger Polymerer.

12. Polymerzusammensetzung, mindestens enthaltend ein halogenhaltiges Polymeres und eine Stabilisatorzusammensetzung gemäß einem der Ansprüche 1 bis 10.

13. Polymerzusammensetzung gemäß Anspruch 12, **dadurch gekennzeichnet, dass** sie die Stabilisatorzusammensetzung in einer Menge von 0,2 bis 10 phr bezogen auf die Gesamtmenge an Polymer enthält.

14. Verfahren zur Stabilisierung halogenhaltiger Polymerer, bei dem ein halogenhaltiges Polymeres oder ein Gemisch aus zwei oder mehr halogenhaltigen Polymeren oder ein Gemisch aus einem oder mehreren halogenhaltigen Polymeren und einem oder mehreren halogenfreien Polymeren mit einer Stabilisatorzusammensetzung gemäß einem der Ansprüche 1 bis 10 vermischt wird.

15. Formkörper, mindestens enthaltend eine Stabilisatorzusammensetzung gemäß einem der Ansprüche 1 bis 10 oder eine Polymerzusammensetzung gemäß einem der Ansprüche 15 oder 16.

## Claims

1. Stabiliser composition for stabilising halogenated polymers, containing
a) at least one salt of a dicarboxylic acid or dicarboxylic acid monoester of the general formula (I) or (II) 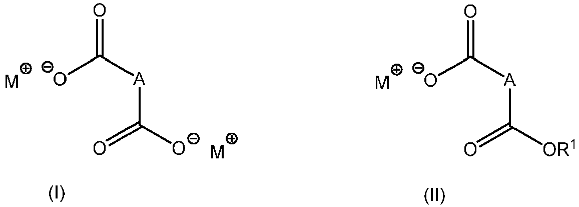 or a mixture of two or more thereof,
wherein M⁺ stands for Li⁺, Na⁺, K⁺, NH₄⁺ or an organic cation,
R¹ stands for hydrogen, substituted or unsubstituted, linear or branched, saturated or unsaturated aliphatic alkyl radicals having 1 to 44 carbon atoms, substituted or unsubstituted, saturated or unsaturated cycloalkyl radicals having 5 to 44 carbon atoms, substituted or unsubstituted aryl radicals having 5 to 44 carbon atoms, substituted or unsubstituted aralkyl radicals having 6 to 44 carbon atoms, substituted or unsubstituted, linear or branched alkenyl radicals having 2 to 44 carbon atoms or substituted or unsubstituted, linear or branched alkinyl radicals having 6 bis 44 carbon atoms, and
A stands for a carbon chain consisting of at least two carbon atoms,
wherein the shortest link between the carboxylate groups is a saturated carbon chain consisting of at least two carbon atoms,
wherein each of the at least two carbon atoms of the shortest link between the carboxylate groups bears two radicals R² and R³ independently of one another, and the radicals R² and R³ of the at least two carbon atoms of the shortest link between the carboxylate groups are, independently of one another, hydrogen, substituted or unsubstituted, linear or branched, saturated or unsaturated aliphatic alkyl radicals having 1 to 44 carbon atoms, substituted or unsubstituted, saturated or unsaturated cycloalkyl radicals having 5 to 44 carbon atoms, substituted or unsubstituted aryl radicals having 5 to 44 carbon atoms, substituted or unsubstituted aralkyl radicals having 6 to 44 carbon atoms, substituted or unsubstituted, linear or branched alkenyl radicals having 2 to 44 carbon atoms, substituted or unsubstituted, linear or branched alkinyl radicals having 6 to 44 carbon atoms, or are linked to one another to form a substituted or unsubstituted, saturated or unsaturated cyclic system having 5 to 44 carbon atoms in such a way that they incorporate at least two carbon atoms of the saturated carbon chain consisting of at least two carbon atoms into the cyclic system, and
b) at least one polyol, wherein the polyol contains at least three hydroxy groups and wherein each primary, secondary or tertiary carbon atom of the polyol forms a single bond with an oxygen atom or two single bonds with one oxygen atom in each case.

2. Stabiliser composition according to claim 1, **characterised in that** M⁺ stands for Na⁺ or K⁺.

3. Stabiliser composition according to any of claims 1 or 2, **characterised in that** the radicals R² and R³ of each of the at least two carbon atoms of the shortest link between the carboxylate groups stand for hydrogen.

4. Stabiliser composition according to any of claims 1 to 3, **characterised in that** the salt of a dicarboxylic acid or dicarboxylic acid monoester according to one of the formulas (I) or (II) is selected from the group consisting of the group consisting of disodium adipate, disodium succinate, the monosodium salt of the adipic acid, the monosodium salt of the succinic acid, monosodium salts of adipic acid monoesters and monosodium salts of succinic acid monoesters.

5. Stabiliser composition according to claim 4, **characterized in that** the ester substitutes of the adipic acid monoesters and succinic acid monoesters are selected from the group consisting of substituted or unsubstituted, linear or branched, saturated or unsaturated aliphatic alkyl radicals having 1 to 44 carbon atoms, substituted or unsubstituted, saturated or unsaturated cycloalkyl radicals having 5 to 44 carbon atoms and substituted or unsubstituted aryl radicals having 5 to 44 carbon atoms.

6. Stabiliser composition according to any of claims 1 to 5, **characterised in that** the salt of a dicarboxylic acid or dicarboxylic acid monoester is contained in an amount of 0.1 to 50 wt.% based on the total amount of stabiliser composition.

7. Stabiliser composition according to any of claims 1 to 6, **characterised in that** the polyol is selected from the group consisting of pentaerythritol, dipentaerythritol and sugar alcohols.

8. Stabiliser composition according to any of claims 1 to 7, **characterised in that** the polyol is contained in an amount of 0.1 to 25 wt.% based on the total amount of the stabiliser composition.

9. Stabiliser composition according to any of claims 1 to 8, **characterised in that** at least one Ca or Zn salt of an organic carboxylic acid having 8 to 20 C atoms or a mixture of two or more thereof is contained, preferably Ca stearate, Zn stearate or a mixture of Ca and Zn stearate.

10. Stabiliser composition according to any of claims 1 to 9, **characterised in that** uracil or at least one uracil derivate is contained.

11. Use of a stabiliser composition according to any of claims 1 to 10 for stabilising halogenated polymers.

12. Polymer composition, at least containing a halogenated polymer and a stabiliser composition according to any of claims 1 to 10.

13. Polymer composition according to claim 12, **characterised in that** it contains the stabiliser composition in an amount of 0.2 to 10 phr based on the total amount of polymer.

14. Method for stabilising halogenated polymers, wherein a halogenated polymer or a mixture of two or more halogenated polymers or a mixture of one or more halogenated polymers and one or more halogen-free polymers is mixed with a stabiliser composition according to any of claims 1 to 10.

15. Moulded body, at least containing a stabiliser composition according to any of claims 1 to 10 or a polymer composition according to any of claims 15 or 16.

## Revendications

1. Composition de stabilisants pour la stabilisation de polymères halogénés, contenant
a) au moins un sel d'un acide dicarboxylique ou d'un monoester d'acide dicarboxylique de formule générale (I) ou (II) 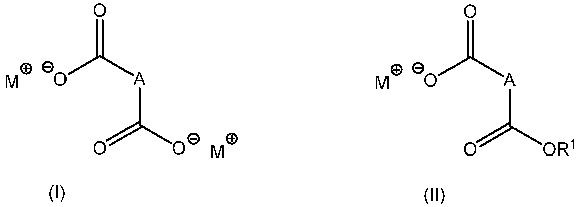 ou un mélange de deux ou plusieurs d'entre eux,
où M⁺ représente Li⁺, Na⁺, K⁺, NH4⁺ ou un cation organique,
R1 représente un atome d'hydrogène, des radicaux alkyle aliphatiques saturés ou insaturés, linéaires ou ramifiés, substitués ou non substitués, ayant de 1 à 44 atomes de carbone, des radicaux cycloalkyle saturés ou insaturés, substitués ou non substitués, ayant de 5 à 44 atomes de carbone, des radicaux aryle substitués ou non substitués ayant de 5 à 44 atomes de carbone, des radicaux aralkyle substitués ou non substitués ayant de 6 à 44 atomes de carbone, des radicaux alcényle substitués ou non substitués, linéaires ou ramifiés, ayant de 2 à 44 atomes de carbone, ou des radicaux alcynyle substitués ou non substitués, linéaires ou ramifiés, ayant de 6 à 44 atomes de carbone, et
A représente une chaîne carbonée d'au moins deux atomes de carbone,
la liaison la plus courte entre les groupes carboxylate étant une chaîne carbonée saturée d'au moins deux atomes de carbone,
chacun des au moins deux atomes de carbone de la liaison la plus courte entre les groupes carboxylate portant indépendamment deux radicaux R² et R³, et
les radicaux R² et R³ des au moins deux atomes de carbone de la liaison la plus courte entre les groupes carboxylate sont, indépendamment l'un de l'autre, des atomes d'hydrogène, des radicaux alkyle aliphatiques saturés ou insaturés, linéaires ou ramifiés, substitués ou non substitués, ayant 1 à 44 atomes de carbone, des radicaux cycloalkyle saturés ou insaturés, substitués ou non substitués, ayant 5 à 44 atomes de carbone, des radicaux aryle substitués ou non substitués ayant 5 à 44 atomes de carbone, des radicaux aralkyle substitués ou non substitués ayant 6 à 44 atomes de carbone, sont des radicaux alcényle linéaires ou ramifiés, substitués ou non substitués, ayant de 2 à 44 atomes de carbone, des radicaux alcynyle linéaires ou ramifiés, substitués ou non substitués, ayant de 6 à 44 atomes de carbone, ou sont liés entre eux pour former un système cyclique saturé ou insaturé, substitué ou non substitué, ayant de 5 à 44 atomes de carbone, de telle sorte qu'ils incluent au moins deux atomes de carbone de la chaîne carbonée saturée d'au moins deux atomes de carbone dans le système cyclique, et
b) au moins un polyol, dans lequel le polyol contient au moins trois groupes hydroxy et dans lequel chaque atome de carbone primaire, secondaire ou tertiaire du polyol forme une liaison simple avec un atome d'oxygène ou deux liaisons simples avec chacune un atome d'oxygène.

2. Composition de stabilisants selon la revendication 1, **caractérisée en ce que** M⁺ représente Na⁺ ou K⁺.

3. Composition de stabilisant selon l'une quelconque des revendications 1 ou 2, **caractérisée en ce que** les radicaux R² et R³ de chacun des au moins deux atomes de carbone de la liaison la plus courte entre les groupes carboxylate représentent un hydrogène.

4. Composition stabilisante selon l'une quelconque des revendications 1 à 3, **caractérisée en ce que** le sel d'un acide dicarboxylique ou d'un monoester d'acide dicarboxylique correspondant à l'une des formules (I) ou (II) est choisi dans le groupe constitué par l'adipate disodique, le succinate disodique, le sel monosodique de l'acide adipique, le sel monosodique de l'acide succinique, les sels monosodiques de monoesters d'acide adipique et les sels monosodiques de monoesters d'acide succinique.

5. Composition stabilisante selon la revendication 4, **caractérisée en ce que** les substituants esters des monoesters de l'acide adipique et des monoesters de l'acide succinique sont choisis dans le groupe constitué par des radicaux alkyle aliphatiques saturés ou insaturés, linéaires ou ramifiés, substitués ou non substitués, ayant de 1 à 44 atomes de carbone, des radicaux cycloalkyle saturés ou insaturés, substitués ou non substitués, ayant de 5 à 44 atomes de carbone et des radicaux aryle substitués ou non substitués ayant de 5 à 44 atomes de carbone.

6. Composition stabilisante selon l'une quelconque des revendications 1 à 5, **caractérisée en ce que** le sel d'un acide dicarboxylique ou d'un monoester d'acide dicarboxylique est contenu en une quantité de 0,1 à 50 % en poids par rapport à la quantité totale de la composition stabilisante.

7. Composition de stabilisant selon l'une quelconque des revendications 1 à 6, **caractérisée en ce que** le polyol est choisi dans le groupe constitué par le pentaérythritol, le dipentaérythritol et les alcools de sucre.

8. Composition de stabilisants selon l'une quelconque des revendications 1 à 7, **caractérisée en ce que** le polyol est contenu en une quantité de 0,1 à 25 % en poids par rapport à la quantité totale de la composition de stabilisants.

9. Composition stabilisante selon l'une quelconque des revendications 1 à 8, **caractérisée en ce qu'**elle contient au moins un sel de Ca ou de Zn d'un acide carboxylique organique ayant de 8 à 20 atomes de carbone ou un mélange de deux ou plusieurs d'entre eux, de préférence du stéarate de Ca, du stéarate de Zn ou un mélange de stéarate de Ca et de stéarate de Zn.

10. Composition stabilisante selon l'une quelconque des revendications 1 à 9, **caractérisée en ce qu'**elle contient de l'uracile ou au moins un dérivé d'uracile.

11. Utilisation d'une composition de stabilisants selon l'une quelconque des revendications 1 à 10 pour stabiliser des polymères halogénés.

12. Composition polymère contenant au moins un polymère halogéné et une composition stabilisante selon l'une quelconque des revendications 1 à 10.

13. Composition de polymère selon la revendication 12, **caractérisée en ce qu'**elle contient la composition de stabilisant en une quantité de 0,2 à 10 pc par rapport à la quantité totale de polymère.

14. Procédé de stabilisation de polymères halogénés, comprenant le mélange d'un polymère halogéné ou d'un mélange de deux ou plusieurs polymères halogénés ou d'un mélange d'un ou plusieurs polymères halogénés et d'un ou plusieurs polymères non halogénés avec une composition stabilisante selon l'une quelconque des revendications 1 à 10.

15. Corps moulé, contenant au moins une composition de stabilisant selon l'une des revendications 1 à 10 ou une composition de polymère selon l'une quelconque des revendications 15 ou 16.
